# EUROPEAN PATENT SPECIFICATION

(11) **EP 2 006 319 B1**
(45) Date of publication and mention of the grant of the patent: **14.08.2013**
(21) Application number: 07713509.3
(22) Date of filing: 27.02.2007
(51) Int. Cl.: C08G 75/06, G02B 1/04, C08K 3/06, C08L 81/02

(54) **POLYMERIZABLE COMPOSITION, RESIN USING SAME, OPTICAL COMPONENT AND LENS**
POLYMERISIERBARE ZUSAMMENSETZUNG, HARZ UNTER VERWENDUNG DAVON, OPTISCHES BAUTEIL UND LINSE
COMPOSITION POLYMERISABLE, RESINE UTILISANT CETTE COMPOSITION, COMPOSANT OPTIQUE ET LENTILLE

(30) Priority: 01.03.2006 JP 2006055572
(43) Date of publication of application: 24.12.2008
(73) Proprietor: Mitsui Chemicals, Inc., Tokyo 105-7117 (JP)
(72) Inventor: USUGI, Shinichi, Sodegaura-shi, Chiba 2990265 (JP); NAKAMURA, Mitsuo, Sodegaura-shi, Chiba 2990265 (JP); NARUSE, Hiroshi, Sodegaura-shi, Chiba 2990265 (JP)
(74) Representative: Wills, Andrew Jonathan
(86) International application number: PCT/JP2007/000127
(87) International publication number: WO 2007/099702

(56) References cited:
- EP-A- 1 731 547
- WO-A1-2005/095490
- JP-A- 2005 298 587
- JP-A- 2005 298 742
- DATABASE WPI Week 200608 Thomson Scientific, London, GB; AN 2006-073495 XP002565748 -& JP 2006 008557 A (MITSUI CHEM INC) 12 January 2006 (2006-01-12)
- DATABASE WPI Week 200602 Thomson Scientific, London, GB; AN 2006-013915 XP002565749 -& JP 2005 330352 A (MITSUI CHEM INC) 2 December 2005 (2005-12-02)

## Description

### TECHNICAL FIELD

The present invention relates to a polymerizable composition, a resin obtained by polymerizing the polymerizable composition, and an optical component and a lens comprised of the resin.

### BACKGROUND ART

Inorganic glass has excellent general properties, such as excellent transparency and small optical anisotropy, and thus is used in a wide range of fields as a transparent material. However, inorganic glass has disadvantages such as that the glass is heavy and susceptible to breakage, and that the productivity is poor in the case of obtaining products by molding and processing the glass. Thus, as a material substituting the inorganic glass, transparent organic polymer materials (optical resins) are being used. Examples of optical components obtained from such optical resins include the lenses of spectacles for vision correction, plastic lenses such as the lenses of photographing equipments such as digital cameras, and the like, which are being put to practical use and gaining popularity. Particularly, with regard to the use as the lenses of spectacles for vision correction, lenses made of optical resins are widely used by virtue of features such as that the resins are lightweight, hard to crack, capable of being dyed, thus making the lens products highly fashionable, and the like, as compared to the lenses made of inorganic glass.

Conventionally, as the optical resin used in the lenses of spectacles, crosslinked type resins obtained by cast polymerizing diethylene glycol bisallyl carbonate under heating (typically referred to as DAC resins) have been practicalized, and due to the features such as good transparency and heat resistance, and low chromatic aberration, the crosslinked type resins have been most extensively used for the general applications as plastic lenses for spectacles for vision correction. However, since the plastic lenses have low refractive index (nd = 1.50), their center thickness or the circumference thickness (edge thickness) is increased, thus causing problems such as inferior wear feeling and fashionableness. Thus, there has been a demand for a resin for plastic lenses having a high refractive index, which can resolve these problems, and development of the resin has been achieved.

In such trend, polythiourethane containing a sulfur atom, which is obtained by cast polymerizing a diisocyanate compound and a polythiol compound, has excellent transparency and impact resistance, and has a high refractive index (nd = 1.6 to 1.7), while also realizing very excellent features such as relatively low chromatic aberration. Thus, polythiourethane has been used in the application of high quality plastic lenses for spectacles for vision correction having small thicknesses and light weight.

Meanwhile, in the trend pursuing for an optical resin having a higher refractive index, some resins such as a transparent resin obtained by polymerizing a compound having an episulfide group (Patent Document 1, Patent Document 2) or a compound having a thietane group (Patent Document 3), and a resin obtained by polymerizing a Se-containing compound (Patent Document 4) have been proposed. However, further improvements are desired for the transparent resin obtained by polymerizing a compound having an episulfide group from the aspect of mechanical properties, for the compound having a thietane group from the aspect of polymerizability, and for the resin obtained by polymerizing a compound containing metal such as selenium (Se) from the aspect of further enhancing safety. Recently, there has been a demand for an optical resin having a higher refractive index, which has the general properties required from plastic lenses (transparency, thermal properties, mechanical properties, and the like) and has a refractive index (nd) of, for example, greater than 1.7, and development of the resin is in progress. Under such circumstances, a metal-containing thietane compound has been newly discovered, and thus a high refractive index optical resin having a refractive index (nd) of greater than 1.7 has been proposed (Patent Document 5).
[Patent Document 1] Japanese Patent Laid-open No.H9-110979
[Patent Document 2] Japanese Patent Laid-open No.H11-322930
[Patent Document 3] Japanese Patent Laid-open No.2003-327583
[Patent Document 4] Japanese Patent Laid-open No.H11-140046
[Patent Document 5] WO 2005-095490

### DISCLOSURE OF THE INVENTION

The present invention provides a polymerizable composition having the general properties required from optical components such as plastic lenses (transparency, thermal properties, mechanical properties and the like) and providing a very high refractive index (nd) of greater than 1.7, a resin obtained by polymerizing this composition, and optical components and lenses comprised of the resin.

### [Means for Solving the Problems]

In order to solve above mentioned problems, the inventors of the present invention devotedly conducted investigation on metal-containing thietane compounds, and as a result, found that further increment of the refractive index can be achieved by copolymerizing a metal-containing thietane compound and elemental sulfur, thus completing the invention.
That is, the invention relates to followings.
[1] A polymerizable composition including a compound represented by the following formula (1) and elemental sulfur; 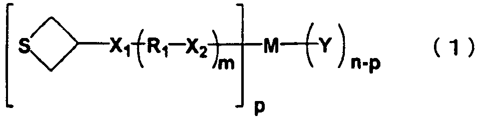 wherein in the formula (1), M represents Sn; X₁ and X₂ each independently represent a sulfur atom or an oxygen atom; R₁ represents a divalent organic group as defined in claim 1; m represents an integer of 0 or 1 or more; p represents an integer of 1 or more and n or less; n represents the valency of the metal atom M; Y each independently represent an inorganic or organic residue as specified in claim 1; and when n-p is 2 or more, Y's may bind to each other to form a ring containing the metal atom M, and wherein the content of the elemental sulfur is 5 parts by weight or more and 50 parts by weight or less, based on 100 parts by weight of the sum of the compound represented by the formula (1) and the elemental sulfur.
[2] The polymerizable composition as set forth in [1], wherein m is 0 in the compound represented by the formula (1).
[3] The polymerizable composition as set forth in [2], wherein for the compound represented by the formula (1), m = 0 and X₁ is a sulfur atom.
[4] The polymerizable composition as set forth in [3], wherein for the compound represented by the formula (1), n = p, m = 0, and X₁ is a sulfur atom.
[5] The polymerizable composition as set forth in [1], wherein m = 0, X₁ is a sulfur atom, p = 4 and n = 4.
[6] A method for producing a resin, including cast polymerizing the polymerizable composition as set forth in [1].
[7] A resin obtained by polymerizing the polymerizable composition as set forth in [1].
[8] An optical component comprised of the resin as set forth in [7].
[9] A lens formed of the resin as set forth in [7].

The resin obtained by polymerizing the polymerizable composition of the invention has high transparency, good heat resistance and mechanical strength, while having a high refractive index (nd) exceeding 1.7, and thus is useful, for example, as a resin used in the optical components such as plastic lenses.

### BEST MODE FOR CARRYING OUT THE INVENTION

Hereinafter, the present invention will be described in detail.
The invention relates to a polymerizable composition including a compound containing a thietane group and a metal atom in the molecule, as represented by the following formula (1), and elemental sulfur.

Hereinafter, the respective components will be explained by means of specific examples, but the invention is not intended to be limited to the exemplary compounds given below. Furthermore, according to the invention, the exemplary compounds for the respective components may be used individually, or may also be used in combination of multiple species.
First, the following formula (1) will be described.

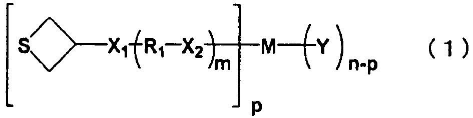

wherein in the formula (1), M represents a metal atom; X₁ and X₂ each independently represent a sulfur atom or an oxygen atom; R₁ represents a divalent organic group; m represents an integer of 0 or 1 or greater; p represents n integer of 1 or greater and n or less; n represents the valency of the metal atom M; Y each independently represent an inorganic or organic residue; and when n-p is 2 or greater, Y's may bind to each other to form a ring containing the metal atom M.

In the above formula (1), M represents a metal atom. Examples of M include elements of Group 11 of the long form periodic table (hereinafter, the same), such as a copper (Cu) atom, a gold (Au) atom, and a silver (Ag) atom;
elements of Group 12, such as a zinc (Zn) atom;
elements of Group 13, such as an aluminum (Al) atom;
elements of Group 4, such as a zirconium (Zr) atom and a titanium (Ti) atom;
elements of Group 14, such as a tin (Sn) atom, a silicon (Si) atom, a germanium (Ge) atom and a lead (Pb) atom; and
elements of Group 8 or 10, such as an iron (Fe) atom and a platinum (Pt) atom.

M is preferably
an element of Group 14, such as a Sn atom, a Si atom, a Ge atom or a Pb atom;
an element of Group 4, such as a Zr atom or a Ti atom;
an element of Group 13, such as an Al atom; or
an element of Group 12, such as a Zn atom, and more preferably an element of Group 14, such as a Sn atom, a Si atom or a Ge atom; or an element of Group 4, such as a Zr atom or a Ti atom. More specifically, M is a Sn atom.

In the formula (1), X₁ and X₂ each independently represent a sulfur atom or an oxygen atom. From the viewpoint of high refractive index, which is a desired effect of the invention, a sulfur atom is more preferred as X₁ and X₂.

In the formula (1), R₁ represents a divalent organic group.
As such divalent organic group, a chain-like or cyclic aliphatic group, an aromatic group and an aromatic-aliphatic group may be mentioned, and preferably, a chain-like aliphatic group having 1 or more and 20 or fewer carbon atoms, a cyclic aliphatic group having 3 or more and 20 or fewer carbon atoms, an aromatic group having 5 or more and 20 or fewer carbon atoms, and an aromatic-aliphatic group having 6 or more and 20 or fewer carbon atoms, may be mentioned.

As for R₁, more specifically, such divalent organic group is a chain-like or cyclic aliphatic group, an aromatic group or an aromatic-aliphatic group, and preferably,
a substituted or unsubstituted, chain-like or cyclic aliphatic group having 1 or more and 20 or fewer carbon atoms, such as a methylene group, an ethylene group, a 1,2-dichloroethylene group, a trimethylene group, a tetramethylene group, a pentamethylene group, a cyclopentylene group, a hexamethylene group, a cyclohexylene group, a heptamethylene group, an octamethylene group, a nonamethylene group, a decamethylene group, an undecamethylene group, a dodecamethylene group, a tridecamethylene group, a tetradecamethylene group, or a pentadecamethylene group;
a substituted or unsubstituted aromatic group having 5 or more and 20 or fewer carbon atoms, such as a phenylene group, a chlorophenylene group, a naphthalene group, an indenylene group, an anthracenylene group, or a fluorenylene group; or
a substituted or unsubstituted aromatic-aliphatic group having 6 or more and 20 or fewer carbon atoms, such as a -C₆H₄-CH₂-group, a -CH₂-C₆H₄-CH₂- group, a -CH₂-C₆H₃(Cl)-CH₂- group, a -C₁₀H₆-CH₂- group, a -CH₂-C₁₀H₆-CH₂- group, or a -CH₂CH₂-C₆H₄-CH₂CH₂ group.

R₁ is more preferably a substituted or unsubstituted, chain-like or cyclic aliphatic group having 1 or more and 6 or fewer carbon atoms, such as a methylene group, an ethylene group, a 1,2-dichloroethylene group, a trimethylene group, a cyclopentylene group, or a cyclohexylene group;
a substituted or unsubstituted aromatic group having 5 or more and 15 or fewer carbon atoms, such as a phenylene group, a chlorophenylene group, a naphthalene group, indenylene group, an anthracenylene group, or a fluorenylene group; or
a substituted or unsubstituted aromatic-aliphatic group having 6 or more and 15 or fewer carbon atoms, such as a -C₆H₄-CH₂-group, a -CH₂-C₆H₄-CH₂- group, a -CH₂-C₆H₃(Cl)-CH₂- group, a -C₁₀H₆-CH₂- group, a -CH₂-C₁₀H₆-CH₂- group, or a -CH₂CH₂-C₆H₄-CH₂CH₂- group.

Such divalent organic group may contain a heteroatom other than carbon atoms and hydrogen atoms in the group. Such heteroatom may be exemplified by an oxygen atom or a sulfur atom, but upon considering the desired effect of the invention, a sulfur atom is preferred.

In the formula (1), m represents an integer of 0, or 1 or more.
Such m is preferably an integer of 0 or greater and 4 or less, more preferably an integer of 0 or greater and 2 or less, and even more preferably an integer of 0 or 1.

In the formula (1), n represents the valency of the metal atom M.

In the formula (1), p represents an integer of 1 or greater and n or less.
Such p is preferably n, n-1 or n-2, and more preferably n or n-1.

In the formula (1), Y each independently represent an inorganic or organic residue.
When the compound represented by the formula (1) includes multiple Y's, the multiple Y's each independently represent an inorganic or organic residue. That is, the multiple Y's may be identical groups, or may also be different groups. More specifically, all of the multiple Y's may be respectively different, some of the multiple Y's may be identical groups, or all of the multiple Y's may be identical groups.

The inorganic or organic residue constituting Y is not particularly limited, but for example, a hydrogen atom, a halogen atom, a hydroxyl group, a thiol group, a substituted or unsubstituted alkyl group, a substituted or unsubstituted aryl group, a substituted or unsubstituted aralkyl group, a substituted or unsubstituted alkoxy group, a substituted or unsubstituted alkylthio group, a substituted or unsubstituted aryloxy group, or a substituted or unsubstituted arylthio group may be mentioned.

Among these, a halogen atom, a substituted or unsubstituted alkyl group, a substituted or unsubstituted aryl group, a substituted or unsubstituted aralkyl group, a substituted or unsubstituted alkoxy(alkyloxy) group, a substituted or unsubstituted alkylthio group, a substituted or unsubstituted aryloxy group, and a substituted or unsubstituted arylthio group will be discussed in the following.
Specific examples of the halogen atom include a fluorine atom, a chlorine atom, a bromine atom and an iodine atom.

Specific examples of the substituted or unsubstituted alkyl group include a straight-chained alkyl group having 1 or more and 10 or fewer carbon atoms in total, such as a methyl group, an ethyl group, an n-propyl group, an n-butyl group, an n-pentyl group, or an n-hexyl group;
a branched alkyl group having 3 or more and 10 or fewer carbon atoms in total, such as an isopropyl group, an isobutyl group, a sec-butyl group, an isopentyl group, a sec-pentyl group, a 1-methylpentyl group, a 2-methylpentyl group, a 3-methylpentyl group, a 4-methylpentyl group, a 1-ethylbutyl group, a 2-ethylbutyl group, a 1-methylhexyl group, a 2-methylhexyl group, a 3-methylhexyl group, a 4-methylhexyl group, a 5-methylhexyl group, a 1-ethylpentyl group, a 2-ethylpentyl group, a 3-ethylpentyl group, a 1-n-propylbutyl group, a 1-iso-propylbutyl group, a 1-iso-propyl-2-methylpropyl group, a 1-methylheptyl group, a 2-methylheptyl group, a 3-methylheptyl group, a 4-methylheptyl group, a 5-methylheptyl group, a 6-methylheptyl group, a 1-ethylhexyl group, a 2-ethylhexyl group, a 3-ethylhexyl group, a 4-ethylhexyl group, a 1-n-propylpentyl group, a 2-n-propylpentyl group, a 1-iso-propylpentyl group, a 2-iso-propylpentyl group, a 1-n-butylbutyl group, a 1-iso-butylbutyl group, a 1-sec-butylbutyl group, a 1-tert-butylbutyl group, a 2-tert-butylbutyl group, a tert-butyl group, a tert-pentyl group, a 1,1-dimethylbutyl group, a 1,2-dimethylbutyl group, a 1,3-dimethylbutyl group, a 2,3-dimethylbutyl group, a 1-ethyl-2-methylpropyl group, a 1,1-dimethylpentyl group, a 1,2-dimethylpentyl group, a 1,3-dimethylpentyl group, a 1,4-dimethylpentyl group, a 2,2-dimethylpentyl group, a 2,3-dimethylpentyl group, a 2,4-dimethylpentyl group, a 3,3-dimethylpentyl group, a 3,4-dimethylpentyl group, a 1-ethyl-1-methylbutyl group, a 1-ethyl-2-methylbutyl group, a 1-ethyl-3-methylbutyl group, a 2-ethyl-1-methylbutyl group, a 2-ethyl-3-methylbutyl group, a 1,1-dimethylhexyl group, a 1,2-dimethylhexyl group, a 1,3-dimethylhexyl group, a 1,4-dimethylhexyl group, a 1,5-dimethylhexyl group, a 2,2-dimethylhexyl group, a 2,3-dimethylhexyl group, a 2,4-dimethylhexyl group, a 2,5-dimethylhexyl group, a 3,3-dimethylhexyl group, a 3,4-dimethylhexyl group, a 3,5-dimethylhexyl group, a 4,4-dimethylhexyl group, a 4,5-dimethylhexyl group, a 1-ethyl-2-methylpentyl group, a 1-ethyl-3-methylpentyl group, a 1-ethyl-4-methylpentyl group, a 2-ethyl-1-methylpentyl group, a 2-ethyl-2-methylpentyl group, a 2-ethyl-3-methylpentyl group, a 2-ethyl-4-methylpentyl group, a 3-ethyl-1-methylpentyl group, a 3-ethyl-2-methylpentyl group, a 3-ethyl-3-methylpentyl group, a 3-ethyl-4-methylpentyl group, a 1-n-propyl-1-methylbutyl group, a 1-n-propyl-2-methylbutyl group, a 1-n-propyl-3-methylbutyl group, a 1-iso-propyl-1-methylbutyl group, a 1-iso-propyl-2-methylbutyl group, a 1-iso-propyl-3-methylbutyl group, a 1,1-diethyl butyl group, a 1,2-diethylbutyl group, a 1,1,2-trimethylpropyl group, a 1,2,2-trimethylpropyl group, a 1,1,2-trimethylbutyl group, a 1,1,3-trimethylbutyl group, a 1,2,3-trimethylbutyl group, a 1,2,2-trimethylbutyl group, a 1,3,3-trimethylbutyl group, a 2,3,3-trimethylbutyl group, a 1,1,2-trimethylpentyl group, a 1,1,3-trimethylpentyl group, a 1,1,4-trimethylpentyl group, a 1,2,2-trimethylpentyl group, a 1,2,3-trimethylpentyl group, a 1,2,4-trimethylpentyl group, a 1,3,4-trimethylpentyl group, a 2,2,3-trimethylpentyl group, a 2,2,4-trimethylpentyl group, a 2,3,4-trimethylpentyl group, a 1,3,3-trimethylpentyl group, a 2,3,3-trimethylpentyl group, a 3,3,4-trimethylpentyl group, a 1,4,4-trimethylpentyl group, a 2,4,4-trimethylpentyl group, a 3,4,4-trimethylpentyl group, a 1-ethyl-1,2-dimethylbutyl group, a 1-ethyl-1,3-dimethylbutyl group, a 1-ethyl-2,3-dimethylbutyl group, a 2-ethyl-1,1-dimethylbutyl group, a 2-ethyl-1,2-dimethylbutyl group, a 2-ethyl-1,3-dimethylbutyl group, or a 2-ethyl-2,3-dimethylbutyl group; and
a saturated cyclic alkyl group having 5 or more and 10 or fewer carbon atoms in total, such as a cyclopentyl group, a cyclohexyl group, a methylcyclopentyl group, a methoxycyclopentyl group, a methoxycyclohexyl group, a methylcyclohexyl group, a 1,2-dimethylcyclohexyl group, a 1,3-dimethylcyclohexyl group, a 1,4-dimethylcyclohexyl group, or an ethylcyclohexyl group.

Specific examples of the substituted or unsubstituted aryl group include an aromatic hydrocarbon having 20 or fewer carbon atoms in total, such as a phenyl group, a naphthyl group, an anthranyl group, or a cyclopentadienyl group;
an alkyl-substituted aryl group having 20 or fewer carbon atoms in total, such as a 2-methylphenyl group, a 3-methylphenyl group, a 4-methylphenyl group, a 2-ethylphenyl group, a propylphenyl group, a butylphenyl group, a hexylphenyl group, a cyclohexylphenyl group, an octyl phenyl group, a 2-methyl-1-naphthyl group, a 3-methyl-1-naphthyl group, a 4-methyl-1-naphthyl group, a 5-methyl-1-naphthyl group, a 6-methyl-1-naphthyl group, a 7-methyl-1-naphthyl group, an 8-methyl-1-naphthyl group, a 1-methyl-2-naphthyl group, a 3-methyl-2-naphthyl group, a 4-methyl-2-naphthyl group, a 5-methyl-2-naphthyl group, a 6-methyl-2-naphthyl group, a 7-methyl-2-naphthyl group, a 8-methyl-2-naphthyl group, a 2-ethyl-1-naphthyl group, a 2,3-dimethylphenyl group, a 2,4-dimethylphenyl group, a 2,5-dimethylphenyl group, a 2,6-dimethylphenyl group, a 3,4-dimethylphenyl group, a 3,5-dimethylphenyl group, a 3,6-dimethylphenyl group, a 2,3,4-trimethylphenyl group, a 2,3,5-trimethylphenyl group, a 2,3,6-trimethylphenyl group, a 2,4,5-trimethylphenyl group, a 2,4,6-trimethylphenyl group, or a 3,4,5-trimethylphenyl group;
a monoalkoxyaryl group having 20 or fewer carbon atoms in total and substituted with a substituted or unsubstituted alkyloxy group having 10 or fewer carbon atoms, such as a 2-methoxyphenyl group, a 3-methoxyphenyl group, a 4-methoxyphenyl group, a 2-ethoxyphenyl group, a propoxyphenyl group, a butoxyphenyl group, a hexyloxyphenyl group, a cyclohexyloxyphenyl group, an octyloxyphenyl group, a 2-methoxy-1-naphthyl group, a 3-methoxy-1-naphthyl group, a 4-methoxy-1-naphthyl group, a 5-methoxy-1-naphthyl group, a 6-methoxy-1-naphthyl group, a 7-methoxy-1-naphthyl group, an 8-methoxy-1-naphthyl group, a 1-methoxy-2-naphthyl group, a 3-methoxy-2-naphthyl group, a 4-methoxy-2-naphthyl group, a 5-methoxy-2-naphthyl group, a 6-methoxy-2-naphthyl group, a 7-methoxy-2-naphthyl group, an 8-methoxy-2-naphthyl group, or a 2-ethoxy-1-naphthyl group;
a dialkoxyaryl group having 20 or fewer carbon atoms in total and substituted with a substituted or unsubstituted alkyloxy group having 10 or fewer carbon atoms, such as a 2,3-dimethoxyphenyl group, a 2,4-dimethoxyphenyl group, a 2,5-dimethoxyphenyl group, a 2,6-dimethoxyphenyl group, a 3,4-dimethoxyphenyl group, a 3,5-dimethoxyphenyl group, a 3,6-dimethoxyphenyl group, a 4,5-dimethoxy-1-naphthyl group, a 4,7-dimethoxy-1-naphthyl group, a 4,8-dimethoxy-1-naphthyl group, a 5,8-dimethoxy-1-naphthyl group, or a 5,8-dimethoxy-2-naphthyl group; and
a trialkoxyaryl group having 20 carbon atoms or fewer in total and substituted with a substituted or unsubstituted alkyloxy group having 10 or fewer carbon atoms, such as a 2,3,4-trimethoxyphenyl group, a 2,3,5-trimethoxyphenyl group, a 2,3,6-trimethoxyphenyl group, a 2,4,5-trimethoxyphenyl group, a 2,4,6-trimethoxyphenyl group, or a 3,4,5-trimethoxyphenyl group; and
an aryl group having 20 carbon atoms in total and substituted with a halogen atom, such as a chlorophenyl group, a dichlorophenyl group, a trichlorophenyl group, a bromophenyl group, a dibromophenyl group, an iodophenyl group, a fluorophenyl group, a chloronaphthyl group, a bromonaphthyl group, a difluorophenyl group, a trifluorophenyl group, a tetrafluorophenyl group, and a pentafluorophenyl group, may be mentioned.

Specific examples of the substituted or unsubstituted aralkyl group include a benzyl group, a phenethyl group, a phenylpropyl group, a naphthylethyl group, and a methyl group, ethyl group or propyl group having an aryl group mentioned in the specific examples of the substituted or unsubstituted aryl group as the side chain.

Specific examples of the substituted or unsubstituted alkyloxy group include a straight-chained or branched alkoxy group having 1 or more and 10 or fewer carbon atoms in total, such as a methoxy group, an ethoxy group, an n-propoxy group, an iso-propoxy group, an n-butoxy group, an iso-butoxy group, a tert-butoxy group, an n-pentyloxy group, an iso-pentyloxy group, an n-hexyloxy group, an iso-hexyloxy group, a 2-ethylhexyloxy group, a 3,5,5-trimethylhexyloxy group, an n-heptyloxy group, an n-octyloxy group, or an n-nonyloxy group;
a cycloalkoxy group having 5 or more and 10 or fewer carbon atoms, such as a cyclopentyloxy group or a cyclohexyloxy group;
an alkoxyalkoxy group having 1 or more and 10 or fewer carbon atoms in total, such as a methoxymethoxy group, an ethoxymethoxy group, an ethoxyethoxy group, an n-propoxymethoxy group, an isopropoxymethoxy group, an n-propoxyethoxy group, an isopropoxyethoxy group, an n-butoxyethoxy group, an iso-butoxyethoxy group, a tert-butoxyethoxy group, an n-pentyloxyethoxy group, an iso-pentyloxyethoxy group, an n-hexyloxyethoxy group, an isohexyloxyethoxy group, or an n-heptyloxyethoxy group; and
an aralkyloxy group such as a benzyloxy group.

Specific examples of the substituted or unsubstituted alkylthio group include a straight-chained or branched alkylthio group having 1 or more and 10 or fewer carbon atoms in total, such as a methylthio group, an ethylthio group, an n-propylthio group, an iso-propylthio group, an n-butylthio group, an iso-butylthio group, a sec-butylthio group, a t-butylthio group, an n-pentylthio group, an iso-pentylthio group, an n-hexylthio group, an iso-hexylthio group, a 2-ethylhexylthio group, a 3,5,5-trimethylhexylthio group, an n-heptylthio group, an n-octylthio group, or an n-nonylthio group;
a cycloalkylthio group having 5 or more and 10 or fewer carbon atoms, such as a cyclopentylthio group or a cyclohexylthio group;
an alkoxyalkylthio group having 1 or more and 10 or fewer carbon atoms in total, such as a methoxyethylthio group, an ethoxy ethylthio group, an n-propoxyethylthio group, an isopropoxyethylthio group, an n-butoxyethylthio group, an isobutoxyethylthio group, a tert-butoxyethylthio group, an n-pentyloxyethylthio group, an iso-pentyloxyethylthio group, an n-hexyloxyethylthio group, an iso-hexyloxyethylthio group, or an n-heptyloxyethylthio group;
an aralkylthio group such as a benzylthio group; and
an alkylthioalkylthio group having 1 or more and 10 or fewer carbon atoms in total, such as a methylthioethylthio group, an ethylthioethylthio group, an n-propylthioethylthio group, an iso-propylthioethylthio group, an n-butylthioethylthio group, an iso-butylthioethylthio group, a tert-butylthioethylthio group, an n-pentylthioethylthio group, an iso-pentylthioethylthio group, an n-hexylthioethylthio group, an iso-hexylthioethylthio group, or an n-heptylthioethylthio group.

Specific examples of the substituted or unsubstituted aryloxygroup include an unsubstituted or alkyl-substituted aryloxy group having 20 or fewer carbon atoms in total, such as a phenyloxy group, a naphthyloxy group, an anthranyloxy group, a 2-methylphenyloxy group, a 3-methylphenyloxy group, a 4-methylphenyloxy group, a 2-ethylphenyloxy group, a propylphenyloxy group, a butylphenyloxy group, a hexylphenyloxy group, a cyclohexylphenyloxy group, an octylphenyloxy group, a 2-methyl-1-naphthyloxy group, a 3-methyl-1-naphthyloxy group, a 4-methyl-1-naphthyloxy group, a 5-methyl-1-naphthyloxy group, a 6-methyl-1-naphthyloxy group, a 7-methyl-1-naphthyloxy group, an 8-methyl-1-naphthyloxy group, a 1-methyl-2-naphthyloxy group, a 3-methyl-2-naphthyloxy group, a 4-methyl-2-naphthyloxy group, a 5-methyl-2-naphthyloxy group, a 6-methyl-2-naphthyloxy group, a 7-methyl-2-naphthyloxy group, an 8-methyl-2-naphthyloxy group, a 2-ethyl-1-naphthyloxy group, a 2,3-dimethylphenyloxy group, a 2,4-dimethylphenyloxy group, a 2,5-dimethylphenyloxy group, a 2,6-dimethylphenyloxy group, a 3,4-dimethylphenyloxy group, a 3,5-dimethylphenyloxy group, a 3,6-dimethylphenyloxy group, a 2,3,4-trimethylphenyloxy group, a 2,3,5-trimethylphenyloxy group, a 2,3,6-trimethylphenyloxy group, a 2,4,5-trimethylphenyloxy group, a 2,4,6-trimethylphenyloxy group, or a 3,4,5-trimethylphenyloxy group;
a monoalkoxyaryloxy group having 20 or fewer carbon atoms in total and substituted with a substituted or unsubstituted alkyloxy group having 10 or fewer carbon atoms, such as a 2-methoxyphenyloxy group, a 3-methoxyphenyloxy group, a 4-methoxyphenyloxy group, a 2-ethoxyphenyloxy group, a propoxyphenyloxy group, a butoxyphenyloxy group, a hexyloxyphenyloxy group, a cyclohexyloxyphenyloxy group, an octyloxyphenyloxy group, a 2-methoxy-1-naphthyloxy group, a 3-methoxy-1-naphthyloxy group, a 4-methoxy-1-naphthyloxy group, a 5-methoxy-1-naphthyloxy group, a 6-methoxy-1-naphthyloxy group, a 7-methoxy-1-naphthyloxy group, an 8-methoxy-1-naphthyloxy group, a 1-methoxy-2-naphthyloxy group, a 3-methoxy-2-naphthyloxy group, a 4-methoxy-2-naphthyloxy group, a 5-methoxy-2-naphthyloxy group, a 6-methoxy-2-naphthyloxy group, a 7-methoxy-2-naphthyloxy group, an 8-methoxy-2-naphthyloxy group, or a 2-ethoxy-1-naphthyloxy group;
a dialkoxyaryloxy group having 20 or fewer carbon atoms in total and substituted with a substituted or unsubstituted alkyloxy group having 10 or fewer carbon atoms, such as a 2,3-dimethoxyphenyloxy group, a 2,4-dimethoxyphenyloxy group, a 2,5-dimethoxyphenyloxy group, a 2,6-dimethoxyphenyloxy group, a 3,4-dimethoxyphenyloxy group, a 3,5-dimethoxyphenyloxy group, a 3,6-dimethoxyphenyloxy group, a 4,5-dimethoxy-1-naphthyloxy group, a 4,7-dimethoxy-1-naphthyloxy group, a 4,8-dimethoxy-1-naphthyloxy group, a 5,8-dimethoxy-1-naphthyloxy group, or a 5,8-dimethoxy-2-naphthyloxy group;
a trialkoxyaryloxy group having 20 or fewer carbon atoms in total and substituted with a substituted or unsubstituted alkyloxy group having 10 or fewer carbon atoms, such as a 2,3,4-trimethoxyphenyloxy group, a 2,3,5-trimethoxyphenyloxy group, a 2,3,6-trimethoxyphenyloxy group, a 2,4,5-trimethoxyphenyloxy group, a 2,4,6-trimethoxyphenyloxy group, or a 3,4,5-trimethoxyphenyloxy group; and
an aryloxy group having 20 or fewer carbon atoms and substituted with a halogen atom, such as a chlorophenyloxy group, a dichlorophenyloxy group, a trichlorophenyloxy group, a bromophenyloxy group, a dibromophenyloxy group, an iodophenyloxy group, a fluorophenyloxy group, a chloronaphthyloxy group, a bromonaphthyloxy group, a difluorophenyloxy group, a trifluorophenyloxy group, a tetrafluorophenyloxy group, or a pentafluorophenyloxy group.

Specific examples of the substituted or unsubstituted arylthio group include an unsubstituted or alkyl-substituted arylthio group having 20 or fewer carbon atoms in total, such as a phenylthio group, a naphthylthio group, an anthranylthio group, a 2-methylphenylthio group, a 3-methylphenylthio group, a 4-methylphenylthio group, a 2-ethylphenylthio group, a propylphenylthio group, a butylphenylthio group, a hexylphenylthio group, a cyclohexylphenylthio group, an octylphenylthio group, a 2-methyl-1-naphthylthio group, a 3-methyl-1-naphthylthio group, a 4-methyl-1-naphthylthio group, a 5-methyl-1-naphthylthio group, a 6-methyl-1-naphthylthio group, a 7-methyl-1-naphthylthio group, an 8-methyl-1-naphthylthio group, a 1-methyl-2-naphthylthio group, a 3-methyl-2-naphthylthio group, a 4-methyl-2-naphthylthio group, a 5-methyl-2-naphthylthio group, a 6-methyl-2-naphthylthio group, a 7-methyl-2-naphthylthio group, an 8-methyl-2-naphthylthio group, a 2-ethyl-1-naphthylthio group, a 2,3-dimethylphenylthio group, a 2,4-dimethylphenylthio group, a 2,5-dimethylphenylthio group, a 2,6-dimethylphenylthio group, a 3,4-dimethylphenylthio group, a 3,5-dimethylphenylthio group, a 3,6-dimethylphenylthio group, a 2,3,4-trimethylphenylthio group, a 2,3,5-trimethylphenylthio group, a 2,3,6-trimethylphenylthio group, a 2,4,5-trimethylphenylthio group, a 2,4,6-trimethylphenylthio group, or a 3,4,5-trimethylphenylthio group;
a monoalkoxyarylthio group having 20 or fewer carbon atoms and substituted with a substituted or unsubstituted alkyloxy group having 10 or fewer carbon atoms, such as a 2-methoxyphenylthio group, a 3-methoxyphenylthio group, a 4-methoxyphenylthio group, a 2-ethoxyphenylthio group, a propoxyphenylthio group, a butoxyphenylthio group, a hexyloxy phenylthio group, a cyclohexyloxyphenylthio group, an octyloxyphenylthio group, a 2-methoxy-1-naphthylthio group, a 3-methoxy-1-naphthylthio group, a 4-methoxy-1-naphthylthio group, a 5-methoxy-1-naphthylthio group, a 6-methoxy-1-naphthylthio group, a 7-methoxy-1-naphthylthio group, an 8-methoxy-1-naphthylthio group, a 1-methoxy-2-naphthylthio group, a 3-methoxy-2-naphthylthio group, a 4-methoxy-2-naphthylthio group, a 5-methoxy-2-naphthylthio group, a 6-methoxy-2-naphthylthio group, a 7-methoxy-2-naphthylthio group, an 8-methoxy-2-naphthylthio group, or a 2-ethoxy-1-naphthylthio group;
a dialkoxyarylthio group having 20 or fewer carbon atoms and substituted with a substituted or unsubstituted alkyloxy group having 10 or fewer carbon atoms, such as a 2,3-dimethoxyphenylthio group, a 2,4-dimethoxyphenylthio group, a 2,5-dimethoxyphenylthio group, a 2,6-dimethoxyphenylthio group, a 3,4-dimethoxyphenylthio group, a 3,5-dimethoxyphenylthio group, a 3,6-dimethoxyphenylthio group, a 4,5-dimethoxy-1-naphthylthio group, a 4,7-dimethoxy-1-naphthylthio group, a 4,8-dimethoxy-1-naphthylthio group, a 5,8-dimethoxy-1-naphthylthio group, or a 5,8-dimethoxy-2-naphthylthio group;
a trialkoxyarylthio group having 20 or fewer carbon atoms in total and substituted with a substituted or unsubstituted alkyloxy group having 10 or fewer carbon atoms, such as a 2,3,4-trimethoxyphenylthio group, a 2,3,5-trimethoxyphenylthio group, a 2,3,6-trimethoxyphenylthio group, a 2,4,5-trimethoxyphenylthio group, a 2,4,6-trimethoxyphenylthio group, or a 3,4,5-trimethoxyphenylthio group; and
an arylthio group having 20 or fewer carbon atoms in total and substituted with a halogen atom, such as a chlorophenylthio group, a dichlorophenylthio group, a trichlorophenylthio group, a bromophenylthio group, a dibromophenylthio group, an iodophenylthio group, a fluorophenylthio group, a chloronaphthylthio group, a bromonaphthylthio group, a difluorophenylthio group, a trifluorophenylthio group, a tetrafluorophenylthio group, or a pentafluorophenylthio group. Y is not intended to be limited to these.

Preferred examples of such Y will be given in the following.
As a preferred example, for example, a hydrogen atom may be mentioned.

Furthermore, among the preferred examples of Y, as the halogen atom, there may be mentioned a chlorine atom, a bromine atom, or an iodine atom.
As the substituted or unsubstituted alkyl group, there may be mentioned a straight-chained alkyl group having 1 or more and 6 or fewer carbon atoms in total, such as a methyl group, an ethyl group, an n-propyl group, an n-butyl group, an n-pentyl group, or an n-hexyl group;
a branched alkyl group having 3 or more and 6 or fewer carbon atoms in total, such as an isopropyl group, an isobutyl group, a sec-butyl group, an isopentyl group, a sec-pentyl group, a 1-methylpentyl group, a 2-methylpentyl group, a 3-methylpentyl group, a 4-methylpentyl group, a 1-ethyl butyl group, a 2-ethyl butyl group, a tert-butyl group, a tert-pentyl group, a 1, 1-dimethylbutyl group, a 1,2-dimethylbutyl group, a 1,3-dimethylbutyl group, or a 2,3-dimethylbutyl group; and
a saturated cyclic alkyl group having 5 or more and 6 or fewer carbon atoms in total, such as a cyclopentyl group or a cyclohexyl group.

As the substituted or unsubstituted aryl group, there may be mentioned an aromatic hydrocarbon having 12 or fewer carbon atoms in total, such as a phenyl group, a naphthyl group, or a cyclopentadienyl group;
an alkyl-substiutted aryl group having 12 or fewer carbon atoms in total, such as a 2-methylphenyl group, a 3-methylphenyl group, a 4-methylphenyl group, a 2-ethylphenyl group, a propylphenyl group, a butylphenyl group, a 2,3-dimethylphenyl group, a 2,4-dimethylphenyl group, a 2,5-dimethylphenyl group, a 2,6-dimethylphenyl group, a 3,4-dimethylphenyl group, a 3,5-dimethylphenyl group, a 3,6-dimethylphenyl group, a 2,3,4-trimethylphenyl group, a 2,3,5-trimethylphenyl group, a 2,3,6-trimethylphenyl group, a 2,4,5-trimethylphenyl group, a 2,4,6-trimethylphenyl group, or a 3,4,5-trimethylphenyl group;
a monoalkoxyaryl group having 12 or fewer carbon atoms and substituted with a substituted or unsubstituted alkyloxy group having 6 or fewer carbon atoms, such as a 2-methoxyphenyl group, a 3-methoxyphenyl group, a 4-methoxyphenyl group, a 2-ethoxyphenyl group, a propoxyphenyl group, or a butoxyphenyl group;
a dialkoxyaryl group having 12 or fewer carbon atoms in total, and substituted with a substituted or unsubstituted alkyloxy group having 6 or fewer carbon atoms, such as a 2,3-dimethoxyphenyl group, a 2,4-dimethoxyphenyl group, a 2,5-dimethoxyphenyl group, a 2,6-dimethoxyphenyl group, a 3,4-dimethoxyphenyl group, a 3,5-dimethoxyphenyl group, or a 3,6-dimethoxyphenyl group; and
an aryl group having 12 or fewer carbon atoms and substituted with a halogen atom, such as a chlorophenyl group, a dichlorophenyl group, a trichlorophenyl group, a bromophenyl group, a dibromophenyl group, an iodophenyl group, a fluorophenyl group, a chloronaphthyl group, a bromonaphthyl group, a difluorophenyl group, a trifluorophenyl group, a tetrafluorophenyl group, or a pentafluorophenyl group.

As the substituted or unsubstituted aralkyl group, there may be mentioned an aralkyl group having 12 or fewer carbon atoms in total, such as a benzyl group, a phenethyl group, or a phenyl propyl group.

As the substituted or unsubstituted alkyloxy group, there may be mentioned a straight-chained or branched alkoxy group having 1 or more and 6 or fewer carbon atoms in total, such as a methoxy group, an ethoxy group, an n-propoxy group, an iso-propoxy group, an n-butoxy group, an iso-butoxy group, a tert-butoxy group, an n-pentyloxy group, an iso-pentyloxy group, an n-hexyloxy group, or an iso-hexyloxy group;
a cycloalkoxy group having 5 or 6 carbon atom in total, such as a cyclopentyloxy group, or a cyclohexyloxy group;
an alkoxyalkoxy group having 1 or more and 6 or fewer carbon atoms in total, such as a methoxymethoxy group, an ethoxymethoxy group, an ethoxyethoxy group, an n-propoxymethoxy group, an isopropoxymethoxy group, an n-propoxyethoxy group, an isopropoxyethoxy group, an n-butoxyethoxy group, an iso-butoxyethoxy group, or a tert-butoxyethoxy group.

As the substituted or unsubstituted alkylthio group, there may be mentioned a straight-chained or branched alkylthio group having 1 or more and 6 or fewer carbon atoms in total, such as a methylthio group, an ethylthio group, an n-propylthio group, an iso-propylthio group, an n-butylthio group, an iso-butylthio group, a sec-butylthio group, a t-butylthio group, an n-pentylthio group, an iso-pentylthio group, an n-hexylthio group, or an iso-hexylthio group;
a cycloalkylthio group having 5 or 6 carbon atoms in total, such as a cyclopentylthio group, or a cyclohexylthio group;
an alkoxyalkylthio group having 1 or more and 6 or fewer carbon atoms in total, such as a methoxyethylthio group, an ethoxyethylthio group, an n-propoxyethylthio group, an isopropoxyethylthio group, an n-butoxyethylthio group, an isobutoxyethylthio group, or a tert-butoxyethylthio group;
a methylthioethylthio group, an ethylthioethylthio group, or an n-propylthioethylthio group; and
an alkylthioalkylthio group having 1 or more and 6 or fewer carbon atoms in total, such as an iso-propylthioethylthio group, an n-butylthioethylthio group, an iso-butylthioethylthio group, or a tert-butylthioethylthio group.

As the substituted or unsubstituted aryloxy group, there may be mentioned an unsubstituted or alkyl-substituted aryloxy group having 12 or fewer carbon atoms in total, such as a phenyloxy group, a naphthyloxy group, a 2-methylphenyloxy group, a 3-methylphenyloxy group, a 4-methylphenyloxy group, a 2-ethylphenyloxy group, a propylphenyloxy group, a butylphenyloxy group, a hexylphenyloxy group, a cyclohexylphenyloxy group, a 2,4-dimethylphenyloxy group, a 2,5-dimethylphenyloxy group, a 2,6-dimethylphenyloxy group, a 3,4-dimethylphenyloxy group, a 3,5-dimethylphenyloxy group, a 3,6-dimethylphenyloxy group, a 2,3,4-trimethylphenyloxy group, a 2,3,5-trimethylphenyloxy group, a 2,3,6-trimethylphenyloxy group, a 2,4,5-trimethylphenyloxy group, a 2,4,6-trimethylphenyloxy group, or a 3,4,5-trimethylphenyloxy group;
a monoalkoxyaryloxy group having 12 or fewer carbon atoms in total and substituted with a substituted or unsubstituted alkyloxy group having 6 or fewer carbon atoms, such as a 2-methoxyphenyloxy group, a 3-methoxyphenyloxy group, a 4-methoxyphenyloxy group, a 2-ethoxyphenyloxy group, a propoxyphenyloxy group, a butoxyphenyloxy group, a hexyloxyphenyloxy group, or a cyclohexyloxyphenyloxy group;
a dialkoxyaryloxy group having 12 or fewer carbon atoms in total and substituted with a substituted or unsubstituted alkyloxy group having 6 or fewer carbon atoms, such as a 2,3-dimethoxyphenyloxy group, a 2,4-dimethoxyphenyloxy group, a 2,5-dimethoxyphenyloxy group, a 2,6-dimethoxyphenyloxy group, a 3,4-dimethoxyphenyloxy group, a 3,5-dimethoxyphenyloxy group, or a 3,6-dimethoxyphenyloxy group; and
an aryloxy group having 12 or fewer carbon atoms in total and substituted with a halogen atom, such as a chlorophenyloxy group, a dichlorophenyloxy group, a trichlorophenyloxy group, a bromophenyloxy group, a dibromophenyloxy group, an iodophenyloxy group, a fluorophenyloxy group, a chloronaphthyloxy group, a bromonaphthyloxy group, a difluorophenyloxy group, a trifluorophenyloxy group, a tetrafluorophenyloxy group, or a pentafluorophenyloxy group.

As the substituted or unsubstituted arylthio group, there may be mentioned an unsubstituted or alkyl-substituted arylthio group having 12 or fewer carbon atoms in total, such as a phenylthio group, a naphthylthio group, a 2-methylphenylthio group, a 3-methylphenylthio group, a 4-methylphenylthio group, a 2-ethylphenylthio group, a propylphenylthio group, a butylphenylthio group, a hexylphenylthio group, a cyclohexylphenylthio group, a 2,4-dimethylphenylthio group, a 2,5-dimethylphenylthio group, a 2,6-dimethylphenylthio group, a 3,4-dimethylphenylthio group, a 3,5-dimethylphenylthio group, a 3,6-dimethylphenylthio group, a 2,3,4-trimethylphenylthio group, a 2,3,5-trimethylphenylthio group, a 2,3,6-trimethylphenylthio group, a 2,4,5-trimethylphenylthio group, a 2,4,6-trimethylphenylthio group, or a 3,4,5-trimethylphenylthio group;
a monoalkoxyarylthio group having 12 or fewer carbon atoms and substituted with a substituted or unsubstituted alkyloxy group having 6 or fewer carbon atoms, such as a 2-methoxyphenylthio group, a 3-methoxyphenylthio group, a 4-methoxyphenylthio group, a 2-ethoxyphenylthio group, a propoxyphenylthio group, a butoxyphenylthio group, a hexyloxyphenylthio group, or a cyclohexyloxyphenylthio group;
a dialkoxyarylthio group having 12 or fewer carbon atoms and substituted with a substituted or unsubstituted alkyloxy group having 6 or fewer carbon atoms, such as a 2,3-dimethoxyphenylthio group, a 2,4-dimethoxyphenylthio group, a 2,5-dimethoxyphenylthio group, a 2,6-dimethoxyphenylthio group, a 3,4-dimethoxyphenylthio group, a 3,5-dimethoxyphenylthio group, a 3,6-dimethoxyphenylthio group, a 4,5-dimethoxy-1-naphthylthio group, a 4,7-dimethoxy-1-naphthylthio group, a 4,8-dimethoxy-1-naphthylthio group, a 5,8-dimethoxy-1-naphthylthio group, or a 5,8-dimethoxy-2-naphthylthio group; and
an arylthio group having 12 or fewer carbon atoms and substituted with a halogen atom, such as a chlorophenylthio group, a a dichlorophenylthio group, trichlorophenylthio group, a bromophenylthio group, a dibromophenylthio group, an iodophenylthio group, a fluorophenylthio group, a chloronaphthylthio group, a bromonaphthylthio group, a difluorophenylthio group, a trifluorophenylthio group, a tetrafluorophenylthio group, or a pentafluorophenylthio group.

More preferred examples of Y will be given in the following.
As a more preferred example of Y, for example, a hydrogen atom may be mentioned.
Furthermore, as the halogen atom, there may be mentioned a chlorine atom and a bromine atom.

As the substituted or unsubstituted alkyl group, there may be mentioned a straight-chained or branched alkyl group having 1 or more and 3 or fewer carbon atoms in total, such as a methyl group, an ethyl group, or an iso-propyl group.

As the substituted or unsubstituted aryl group, there may be mentioned an aromatic hydrocarbon having 12 or fewer carbon atoms in total, such as a phenyl group, a naphthyl group, or a cyclopentadienyl group;
an alkyl-substituted aryl group having 9 or fewer carbon atoms in total, such as a 2-methylphenyl group, a 3-methylphenyl group, a 4-methylphenyl group, a 2-ethylphenyl group, a propylphenyl group, a 2,3-dimethylphenyl group, a 2,4-dimethylphenyl group, a 2,5-dimethylphenyl group, a 2,6-dimethylphenyl group, a 3,4-dimethylphenyl group, a 3,5-dimethylphenyl group, or a 3,6-dimethylphenyl group;
a monoalkoxyaryl group having 9 or fewer carbon atoms in total and substituted with a substituted or unsubstituted alkyloxy group having 3 or fewer carbon atoms, such as a 2-methoxyphenyl group, a 3-methoxyphenyl group, a 4-methoxyphenyl group, a 2-ethoxyphenyl group, or a propoxyphenyl group; and
an aryl group having 12 or fewer carbon atoms in total and substituted with a halogen atom, such as a chlorophenyl group, a dichlorophenyl group, a trichlorophenyl group, a bromophenyl group, a dibromophenyl group, a chloronaphthyl group, or a bromonaphthyl group.

As the substituted or unsubstituted aralkyl group, there may be mentioned an aralkyl group having 9 or fewer carbon atoms in total, such as a benzyl group, a phenethyl group, or a phenylpropyl group.

As the substituted or unsubstituted alkyloxy group, there may be mentioned a straight-chained or branched alkoxy group having 1 or more and 3 or fewer carbon atoms in total, such as a methoxy group, an ethoxy group, or an iso-propoxy group; and
a cycloalkoxy group having 5 or 6 carbon atoms in total, such as a cyclopentyloxy group, or a cyclohexyloxy group.

As the substituted or unsubstituted alkylthio group, there may be mentioned a straight-chained or branched alkylthio group having 1 or more and 3 or fewer carbon atoms in total, such as.a methylthio group, an ethylthio group, an n-propylthio group, or an iso-propylthio group;
a cycloalkylthio group having 5 or 6 carbon atoms in total, such as a cyclopentylthio group, or a cyclohexylthio group; and
an alkylthioalkylthio group having 1 or more and 6 or fewer carbon atoms in total, such as a methylthioethylthio group, an ethylthioethylthio group, an n-propylthioethylthio group, an iso-propylthioethylthio group, an n-butylthioethylthio group, an iso-butylthioethylthio group, or a tert-butylthioethylthio group.

As the substituted or unsubstituted aryloxy group, there may be mentioned an unsubstituted or alkyl-substituted aryloxy group having 9 or fewer carbon atoms, such as a phenyloxy group, a naphthyloxy group, a 2-methylphenyloxy group, a 3-methylphenyloxy group, a 4-methylphenyloxy group, a 2-ethylphenyloxy group, a propylphenyloxy group, a 2,4-dimethylphenyloxy group, a 2,5-dimethylphenyloxy group, a 2,6-dimethylphenyloxy group, a 3,4-dimethylphenyloxy group, a 3,5-dimethylphenyloxy group, or a 3,6-dimethylphenyloxy group;
a monoalkoxyaryloxy group having 9 or fewer carbon atoms in total and substituted with a substituted or unsubstituted alkyloxy group having 3 or fewer carbon atoms, such as a 2-methoxyphenyloxy group, a 3-methoxyphenyloxy group, a 4-methoxyphenyloxy group, a 2-ethoxyphenyloxy group, or a propoxyphenyloxy group; and
an aryloxy group having 12 or fewer carbon atoms in total and substituted with a halogen atom, such as a chlorophenyloxy group, a dichlorophenyloxy group, a trichlorophenyloxy group, a bromophenyloxy group, a dibromophenyloxy group, a chloronaphthyloxy group, or a bromonaphthyloxy group.

As the substituted or unsubstituted arylthio group, there may be mentioned an unsubstituted or alkyl-substituted arylthio group having 9 or fewer carbon atoms in total, such as a phenylthio group, a 2-methylphenylthio group, a 3-methylphenylthio group, a 4-methylphenylthio group, a 2-ethylphenylthio group, a propylphenylthio group, a 2,4-dimethylphenylthio group, a 2,5-dimethylphenylthio group, a 2,6-dimethylphenylthio group, a 3,4-dimethylphenylthio group, a 3,5-dimethylphenylthio group, or a 3,6-dimethylphenylthio group;
a monoalkoxyarylthio group having 9 or fewer carbon atoms in total and substituted with a substituted or unsubstituted alkyloxy group having 3 or fewer carbon atoms, such as a 2-methoxyphenylthio group, a 3-methoxyphenylthio group, a 4-methoxyphenylthio group, a 2-ethoxyphenylthio group, or a propoxyphenylthio group; and
an arylthio group having 12 or fewer carbon atoms and substituted with a halogen atom, such as a chlorophenylthio group, a dichlorophenylthio group, a trichlorophenylthio group, a bromophenylthio group, a dibromophenylthio group, a chloronaphthylthio group, or a bromonaphthylthio group.

Furthermore, in the case where n-p is an integer of 2 or greater, Y's may bind to each other and form a cyclic structure with the metal atom M. That is, multiple Y's may be joined and form a ring containing the metal atom M.

The compound represented by the formula (1) may be specifically exemplified in Table 1 to Table 17 listed below, but is not limited to these. Table 1 to Table 17 are tables showing specific examples of the compound represented by the formula (1). Additionally, in Table 1 to Table 17, the term "CMPD. No." refers to the compound number.

Furthermore, in Table 1 to Table 17, Y₁, Y₂ and Y₃ represent Y in the case where the total number of Y is 3 or less, that is, the value of n-p is 3 or less. Specifically, in the case of n-p = 1, Y is Y₁ only. In the case of n-p = 2, the compound includes Y₁ and Y₂ as Y, and these may be identical groups or different groups. Also, in the case of n-p = 3, the compound includes Y₁, Y₂ and Y₃ as Y, and these may be identical groups or different groups.
Furthermore, when the compounds have one group between Y₁ and
Y₂ in the case that n-p is 2 in the table, two Y's bind to each other and form a ring containing the metal atom M.

**[Table 1]**

| CMPD. No. | M | n | p | n-p | m | X₁ | X₂ | R₁ | Y₁ | Y₂ | Y₃ |
|---|---|---|---|---|---|---|---|---|---|---|---|
| 1-1 | Sn | 4 | 4 | 0 | 0 | S | - | - | - | - | - |
| 1-2 | Sn | 4 | 4 | 0 | 0 | O | - | - | - | - | - |
| 1-3 | Sn | 4 | 4 | 0 | 1 | S | S | CH₂ | - | - | - |
| 1-4 | Sn | 4 | 4 | 0 | 1 | O | S | CH₂ | - | - | - |
| 1-5 | Sn | 4 | 4 | 0 | 1 | S | O | CH₂ | - | - | - |
| 1-6 | Sn | 4 | 4 | 0 | 1 | O | O | CH₂ | - | - | - |
| 1-7 | Sn | 4 | 4 | 0 | 1 | S | S | C₂H₄ | - | - | - |
| 1-8 | Sn | 4 | 4 | 0 | 1 | O | S | C₂H₄ | - | - | - |
| 1-9 | Sn | 4 | 4 | 0 | 1 | S | O | C₂H₄ | - | - | - |
| 1-10 | Sn | 4 | 4 | 0 | 1 | O | O | C₂H₄ | - | - | - |
| 1-11 | Sn | 4 | 4 | 0 | 1 | S | S | 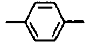 | - | - | - |
| 1-12 | Sn | 4 | 4 | 0 | 1 | O | S | 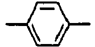 | - | - | - |
| 1-13 | Sn | 4 | 4 | 0 | 1 | S | O | 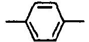 | - | - | - |
| 1-14 | Sn | 4 | 4 | 0 | 1 | O | O | 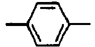 | - | - | - |
| 1-15 | Sn | 4 | 4 | 0 | 1 | S | S | 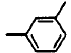 | - | - | - |
| 1-16 | Sn | 4 | 4 | 0 | 1 | O | S | 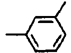 | - | - | - |
| 1-17 | Sn | 4 | 4 | 0 | 1 | S | O | 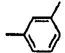 | - | - | - |

**[Table 2]**

| CMPD. No. | M | n | p | n-p | m | X₁ | X₂ | R₁ | Y₁ | Y₂ | Y₃ |
|---|---|---|---|---|---|---|---|---|---|---|---|
| 1-18 | Sn | 4 | 4 | 0 | 1 | O | O | 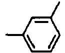 | - | - | - |
| 1-19 | Sn | 4 | 4 | 0 | 1 | S | S | 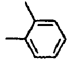 | - | - | - |
| 1-20 | Sn | 4 | 4 | 0 | 1 | O | S | 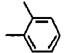 | - | - | - |
| 1-21 | Sn | 4 | 4 | 0 | 1 | S | O | 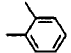 | - | - | - |
| 1-22 | Sn | 4 | 4 | 0 | 1 | O | O | 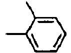 | - | - | - |
| 1-23 | Sn | 4 | 4 | 0 | 1 | S | S | 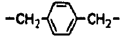 | - | - | - |
| 1-24 | Sn | 4 | 4 | 0 | 1 | O | S | 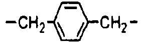 | - | - | - |
| 1-25 | Sn | 4 | 4 | 0 | 1 | S | O | 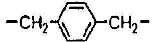 | - | - | - |
| 1-26 | Sn | 4 | 4 | 0 | 1 | O | O | 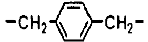 | - | - | - |
| 1-27 | Sn | 4 | 4 | 0 | 1 | S | S | 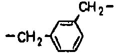 | - | - | - |
| 1-28 | Sn | 4 | 4 | 0 | 1 | O | S | 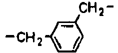 | - | - | - |
| 1-29 | Sn | 4 | 4 | 0 | 1 | S | O | 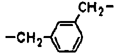 | - | - | - |
| 1-30 | Sn | 4 | 4 | 0 | 1 | O | O | 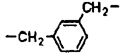 | - | - | - |

**[Table 3]**

| CMPD. No. | M | n | p | n-p | m | X₁ | X₂ | R₁ | Y₁ | Y₂ | Y₃ |
|---|---|---|---|---|---|---|---|---|---|---|---|
| 1-31 | Sn | 4 | 4 | 0 | 1 | S | S | 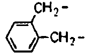 | - | - | - |
| 1-32 | Sn | 4 | 4 | 0 | 1 | O | S | 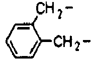 | - | - | - |
| 1-33 | Sn | 4 | 4 | 0 | 1 | S | O | 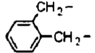 | - | - | - |
| 1-34 | Sn | 4 | 4 | 0 | 1 | O | O | 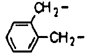 | - | - | - |
| 1-35 | Sn | 4 | 3 | 1 | 0 | S | - | - | CH₃ | - | - |
| 1-36 | Sn | 4 | 3 | 1 | 0 | O | - | - | CH₃ | - | - |
| 1-37 | Sn | 4 | 3 | 1 | 0 | S | - | - | C₂H₅ | - | - |
| 1-38 | Sn | 4 | 3 | 1 | 0 | O | - | - | C₂H₅ | - | - |
| 1-39 | Sn | 4 | 3 | 1 | 0 | S | - | - | C₃H₇ | - | - |
| 1-40 | Sn | 4 | 3 | 1 | 0 | O | - | - | C₃H₇ | - | - |
| 1-41 | Sn | 4 | 3 | 1 | 0 | S | - | - | C₄H₉ | - | - |
| 1-42 | Sn | 4 | 3 | 1 | 0 | O | - | - | C₄H₉ | - | - |
| 1-43 | Sn | 4 | 3 | 1 | 0 | S | - | - | C₆H₅ | - | - |
| 1-44 | Sn | 4 | 3 | 1 | 0 | O | - | - | C₆H₅ | - | - |
| 1-45 | Sn | 4 | 2 | 2 | 0 | S | - | - | CH₃ | CH₃ | - |
| 1-46 | Sn | 4 | 2 | 2 | 0 | O | - | - | CH₃ | CH₃ | - |
| 1-47 | Sn | 4 | 2 | 2 | 0 | S | - | - | C₂H₅ | C₂H₅ | - |
| 1-48 | Sn | 4 | 2 | 2 | 0 | O | - | - | C₂H₅ | C₂H₅ | - |
| 1-49 | Sn | 4 | 2 | 2 | 0 | S | - | - | C₃H₇ | C₃H₇ | - |
| 1-50 | Sn | 4 | 2 | 2 | 0 | O | - | - | C₃H₇ | C₃H₇ | - |

**[Table 4]**

| CMPD. No. | M | n | p | n-p | m | X₁ | X₂ | R₁ | Y₁ | Y₂ | Y₃ |
|---|---|---|---|---|---|---|---|---|---|---|---|
| 1-51 | Sn | 4 | 2 | 2 | 0 | S | - | - | C₄H₉ | C₄H₉ | - |
| 1-52 | Sn | 4 | 2 | 2 | 0 | O | - | - | C₄H₉ | C₄H₉ | - |
| 1-53 | Sn | 4 | 2 | 2 | 0 | S | - | - | C₆H₅ | C₆H₅ | - |
| 1-54 | Sn | 4 | 2 | 2 | 0 | O | - | - | C₆H₅ | C₆H₅ | - |
| 1-55 | Sn | 4 | 1 | 3 | 0 | S | - | - | CH₃ | CH₃ | CH₃ |
| 1-56 | Sn | 4 | 1 | 3 | 0 | O | - | - | CH₃ | CH₃ | CH₃ |
| 1-57 | Sn | 4 | 1 | 3 | 0 | S | - | - | C₂H₅ | C₂H₅ | C₂H₅ |
| 1-58 | Sn | 4 | 1 | 3 | 0 | O | - | - | C₂H₅ | C₂H₅ | C₂H₅ |
| 1-59 | Sn | 4 | 1 | 3 | 0 | S | - | - | C₃H₇ | C₃H₇ | C₃H₇ |
| 1-60 | Sn | 4 | 1 | 3 | 0 | O | - | - | C₃H₇ | C₃H₇ | C₃H₇ |
| 1-61 | Sn | 4 | 1 | 3 | 0 | S | - | - | C₄H₉ | C₄H₉ | C₄H₉ |
| 1-62 | Sn | 4 | 1 | 3 | 0 | O | - | - | C₄H₉ | C₄H₉ | C₄H₉ |
| 1-63 | Sn | 4 | 1 | 3 | 0 | S | - | - | C₆H₅ | C₆H₅ | C₆H₅ |
| 1-64 | Sn | 4 | 1 | 3 | 0 | O | - | - | C₆H₅ | C₆H₅ | C₆H₅ |
| 1-65 | Sn | 4 | 3 | 1 | 0 | S | - | - | SCH₃ | - | - |
| 1-66 | Sn | 4 | 3 | 1 | 0 | O | - | - | SCH₃ | - | - |
| 1-67 | Sn | 4 | 3 | 1 | 0 | S | - | - | SC₂H₅ | - | - |
| 1-68 | Sn | 4 | 3 | 1 | 0 | O | - | - | SC₂H₅ | - | - |
| 1-69 | Sn | 4 | 3 | 1 | 0 | S | - | - | SC₆H₅ | - | - |
| 1-70 | Sn | 4 | 3 | 1 | 0 | O | - | - | SC₆H₅ | - | - |
| 1-71 | Sn | 4 | 2 | 2 | 0 | S | - | - | SC₂H₄S | | - |
| 1-72 | Sn | 4 | 2 | 2 | 0 | O | - | - | SC₂H₄S | | - |
| 1-73 | Sn | 4 | 2 | 2 | 0 | S | - | - | SC₃H₆S | | - |

**[Table 5]**

| CMPD. No. | M | n | p | n-p | m | X₁ | X₂ | R₁ | Y₁ | Y₂ | Y₃ |
|---|---|---|---|---|---|---|---|---|---|---|---|
| 1-74 | Sn | 4 | 2 | 2 | 0 | O | - | - | SC₃H₆S | | - |
| 1-75 | Sn | 4 | 2 | 2 | 0 | S | - | - | SC₂H₄SC₂H₄S | | - |
| 1-76 | Sn | 4 | 2 | 2 | 0 | O | - | - | SC₂H₄SC₂H₄S | | - |
| 1-77 | Sn | 4 | 3 | 1 | 1 | S | S | CH₂ | CH₃ | - | - |
| 1-78 | Sn | 4 | 3 | 1 | 1 | O | S | CH₂ | CH₃ | - | - |
| 1-79 | Sn | 4 | 3 | 1 | 1 | S | O | CH₂ | CH₃ | - | - |
| 1-80 | Sn | 4 | 3 | 1 | 1 | O | O | CH₂ | CH₃ | - | - |
| 1-81 | Sn | 4 | 3 | 1 | 1 | S | S | C₂H₄ | CH₃ | - | - |
| 1-82 | Sn | 4 | 3 | 1 | 1 | O | S | C₂H₄ | CH₃ | - | - |
| 1-83 | Sn | 4 | 3 | 1 | 1 | S | O | C₂H₄ | CH₃ | - | - |
| 1-84 | Sn | 4 | 3 | 1 | 1 | O | O | C₂H₄ | CH₃ | - | - |
| 1-85 | Sn | 4 | 3 | 1 | 1 | S | S | 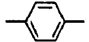 | CH₃ | - | - |
| 1-86 | Sn | 4 | 3 | 1 | 1 | O | S | 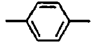 | CH₃ | - | - |
| 1-87 | Sn | 4 | 3 | 1 | 1 | S | O | 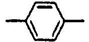 | CH₃ | - | - |
| 1-88 | Sn | 4 | 3 | 1 | 1 | O | O | 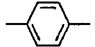 | CH₃ | - | - |
| 1-89 | Sn | 4 | 3 | 1 | 1 | S | S | 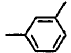 | CH₃ | - | - |
| 1-90 | Sn | 4 | 3 | 1 | 1 | O | S | 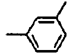 | CH₃ | - | - |
| 1-91 | Sn | 4 | 3 | 1 | 1 | S | O | 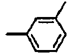 | CH₃ | - | - |

**[Table 6]**

| CMPD. No. | M | n | p | n-p | m | X₁ | X₂ | R₁ | Y₁ | Y₂ | Y₃ |
|---|---|---|---|---|---|---|---|---|---|---|---|
| 1-92 | Sn | 4 | 3 | 1 | 1 | O | O | 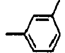 | CH₃ | - | - |
| 1-93 | Sn | 4 | 3 | 1 | 1 | S | S | 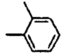 | CH₃ | - | - |
| 1-94 | Sn | 4 | 3 | 1 | 1 | O | S | 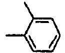 | CH₃ | - | - |
| 1-95 | Sn | 4 | 3 | 1 | 1 | S | O | 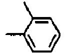 | CH₃ | - | - |
| 1-96 | Sn | 4 | 3 | 1 | 1 | O | O | 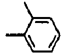 | CH₃ | - | - |
| 1-97 | Sn | 4 | 3 | 1 | 1 | S | S | 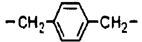 | CH₃ | - | - |
| 1-98 | Sn | 4 | 3 | 1 | 1 | O | S | 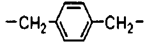 | CH₃ | - | - |
| 1-99 | Sn | 4 | 3 | 1 | 1 | S | O | 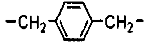 | CH₃ | - | - |
| 1-100 | Sn | 4 | 3 | 1 | 1 | O | O | 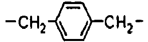 | CH₃ | - | - |
| 1-101 | Sn | 4 | 3 | 1 | 1 | S | S | 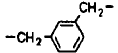 | CH₃ | - | - |
| 1-102 | Sn | 4 | 3 | 1 | 1 | O | S | 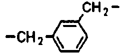 | CH₃ | - | - |
| 1-103 | Sn | 4 | 3 | 1 | 1 | S | O | 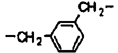 | CH₃ | - | - |
| 1-104 | Sn | 4 | 3 | 1 | 1 | O | O | 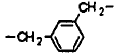 | CH₃ | - | - |

**[Table 7]**

| CMPD. No. | M | n | p | n-p | m | X₁ | X₂ | R₁ | Y₁ | Y₂ | Y₃ |
|---|---|---|---|---|---|---|---|---|---|---|---|
| 1-105 | Sn | 4 | 3 | 1 | 1 | S | S | 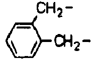 | CH₃ | - | - |
| 1-106 | Sn | 4 | 3 | 1 | 1 | O | S | 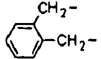 | CH₃ | - | - |
| 1-107 | Sn | 4 | 3 | 1 | 1 | S | O | 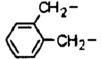 | CH₃ | - | - |
| 1-108 | Sn | 4 | 3 | 1 | 1 | O | O | 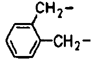 | CH₃ | - | - |
| 1-109 | Sn | 4 | 3 | 1 | 1 | S | S | CH₂ | C₆H₅ | - | - |
| 1-110 | Sn | 4 | 3 | 1 | 1 | O | S | CH₂ | C₆H₅ | - | - |
| 1-111 | Sn | 4 | 3 | 1 | 1 | S | O | CH₂ | C₆H₅ | - | - |
| 1-112 | Sn | 4 | 3 | 1 | 1 | O | O | CH₂ | C₆H₅ | - | - |
| 1-113 | Sn | 4 | 3 | 1 | 1 | S | S | C₂H₄ | C₆H₅ | - | - |
| 1-114 | Sn | 4 | 3 | 1 | 1 | O | S | C₂H₄ | C₆H₅ | - | - |
| 1-115 | Sn | 4 | 3 | 1 | 1 | S | O | C₂H₄ | C₆H₅ | - | - |
| 1-116 | Sn | 4 | 3 | 1 | 1 | O | O | C₂H₄ | C₆H₅ | - | - |
| 1-117 | Sn | 4 | 3 | 1 | 1 | S | S | 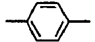 | C₆H₅ | - | - |
| 1-118 | Sn | 4 | 3 | 1 | 1 | O | S | 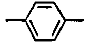 | C₆H₅ | - | - |
| 1-119 | Sn | 4 | 3 | 1 | 1 | S | O | 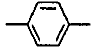 | C₆H₅ | - | - |
| 1-120 | Sn | 4 | 3 | 1 | 1 | O | O | 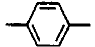 | C₆H₅ | - | - |

**[Table 8]**

| CMPD. No. | M | n | p | n-p | m | X₁ | X₂ | R₁ | Y₁ | Y₂ | Y₃ |
|---|---|---|---|---|---|---|---|---|---|---|---|
| 1-121 | Sn | 4 | 3 | 1 | 1 | S | S | 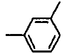 | C₆H₅ | - | - |
| 1-122 | Sn | 4 | 3 | 1 | 1 | O | S | 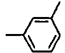 | C₆H₅ | - | - |
| 1-123 | Sn | 4 | 3 | 1 | 1 | S | O | 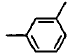 | C₆H₅ | - | - |
| 1-124 | Sn | 4 | 3 | 1 | 1 | O | O | 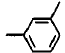 | C₆H₅ | - | - |
| 1-125 | Sn | 4 | 3 | 1 | 1 | S | S | 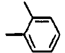 | C₆H₅ | - | - |
| 1-126 | Sn | 4 | 3 | 1 | 1 | O | S | 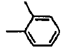 | C₆H₅ | - | - |
| 1-127 | Sn | 4 | 3 | 1 | 1 | S | O | 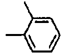 | C₆H₅ | - | - |
| 1-128 | Sn | 4 | 3 | 1 | 1 | O | O | 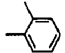 | C₆H₅ | - | - |
| 1-129 | Sn | 4 | 3 | 1 | 1 | S | S | 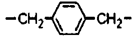 | C₆H₅ | - | - |
| 1-130 | Sn | 4 | 3 | 1 | 1 | O | S | 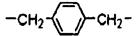 | C₆H₅ | - | - |
| 1-131 | Sn | 4 | 3 | 1 | 1 | S | O | 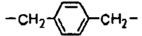 | C₆H₅ | - | - |
| 1-132 | Sn | 4 | 3 | 1 | 1 | O | O | 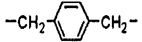 | C₆H₅ | - | - |
| 1-133 | Sn | 4 | 3 | 1 | 1 | S | S | 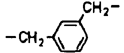 | C₆H₅ | - | - |

**[Table 9]**

| CMPD. No. | M | n | p | n-p | m | X₁ | X₂ | R₁ | Y₁ | Y₂ | Y₃ |
|---|---|---|---|---|---|---|---|---|---|---|---|
| 1-134 | Sn | 4 | 3 | 1 | 1 | O | S | 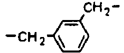 | C₆H₅ | - | - |
| 1-135 | Sn | 4 | 3 | 1 | 1 | S | O | 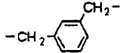 | C₆H₅ | - | - |
| 1-136 | Sn | 4 | 3 | 1 | 1 | O | O | 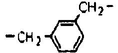 | C₆H₅ | - | - |
| 1-137 | Sn | 4 | 3 | 1 | 1 | S | S | 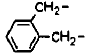 | C₆H₅ | - | - |
| 1-138 | Sn | 4 | 3 | 1 | 1 | O | S | 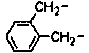 | C₆H₅ | - | - |
| 1-139 | Sn | 4 | 3 | 1 | 1 | S | O | 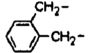 | C₆H₅ | - | - |
| 1-140 | Sn | 4 | 3 | 1 | 1 | O | O | 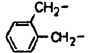 | C₆H₅ | - | - |
| 1-141 | Si | 4 | 4 | 0 | 0 | S | - | - | - | - | - |
| 1-142 | Si | 4 | 4 | 0 | 0 | O | - | - | - | - | - |
| 1-143 | Si | 4 | 4 | 0 | 1 | S | S | CH₂ | - | - | - |
| 1-144 | Si | 4 | 4 | 0 | 1 | O | S | CH₂ | - | - | - |
| 1-145 | Si | 4 | 4 | 0 | 1 | S | O | CH₂ | - | - | - |
| 1-146 | Si | 4 | 4 | 0 | 1 | O | O | CH₂ | - | - | - |
| 1-147 | Si | 4 | 4 | 0 | 1 | S | S | C₂H₄ | - | - | - |
| 1-148 | Si | 4 | 4 | 0 | 1 | O | S | C₂H₄ | - | - | - |
| 1-149 | Si | 4 | 4 | 0 | 1 | S | O | C₂H₄ | - | - | - |
| 1-150 | Si | 4 | 4 | 0 | 1 | O | O | C₂H₄ | - | - | - |

**[Table 10]**

| CMPD. No. | M | n | p | n-p | m | X₁ | X₂ | R₁ | Y₁ | Y₂ | Y₃ |
|---|---|---|---|---|---|---|---|---|---|---|---|
| 1-151 | Si | 4 | 4 | 0 | 1 | S | S | 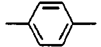 | - | - | - |
| 1-152 | Si | 4 | 4 | 0 | 1 | O | S | 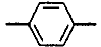 | - | - | - |
| 1-153 | Si | 4 | 4 | 0 | 1 | S | O | 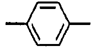 | - | - | - |
| 1-154 | Si | 4 | 4 | 0 | 1 | O | O | 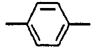 | - | - | - |
| 1-155 | Si | 4 | 4 | 0 | 1 | S | S | 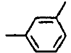 | - | - | - |
| 1-156 | Si | 4 | 4 | 0 | 1 | O | S | 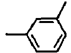 | - | - | - |
| 1-157 | Si | 4 | 4 | 0 | 1 | S | O | 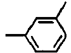 | - | - | - |
| 1-158 | Si | 4 | 4 | 0 | 1 | O | O | 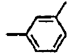 | - | - | - |
| 1-159 | Si | 4 | 4 | 0 | 1 | S | S | 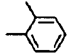 | - | - | - |
| 1-160 | Si | 4 | 4 | 0 | 1 | O | S | 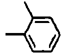 | - | - | - |
| 1-161 | Si | 4 | 4 | 0 | 1 | S | O | 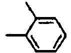 | - | - | - |
| 1-162 | Si | 4 | 4 | 0 | 1 | O | O | 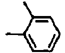 | - | - | - |
| 1-163 | Si | 4 | 4 | 0 | 1 | S | S | 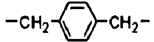 | - | - | - |

**[Table 11]**

| CMPD. No. | M | n | p | n-p | m | X₁ | X₂ | R₁ | Y₁ | Y₂ | Y₃ |
|---|---|---|---|---|---|---|---|---|---|---|---|
| 1-164 | Si | 4 | 4 | 0 | 1 | O | S | 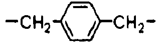 | - | - | - |
| 1-165 | Si | 4 | 4 | 0 | 1 | S | O | 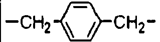 | - | - | - |
| 1-166 | Si | 4 | 4 | 0 | 1 | O | O | 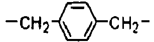 | - | - | - |
| 1-167 | Si | 4 | 4 | 0 | 1 | S | S | 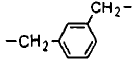 | - | - | - |
| 1-168 | Si | 4 | 4 | 0 | 1 | O | S | 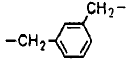 | - | - | - |
| 1-169 | Si | 4 | 4 | 0 | 1 | S | O | 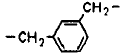 | - | - | - |
| 1-170 | Si | 4 | 4 | 0 | 1 | O | O | 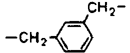 | - | - | - |
| 1-171 | Si | 4 | 4 | 0 | 1 | S | S | 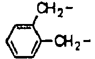 | - | - | - |
| 1-172 | Si | 4 | 4 | 0 | 1 | O | S | 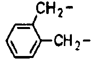 | - | - | - |
| 1-173 | Si | 4 | 4 | 0 | 1 | S | O | 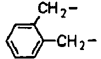 | - | - | - |
| 1-174 | Si | 4 | 4 | 0 | 1 | O | O | 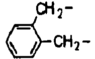 | - | - | - |
| 1-175 | Si | 4 | 3 | 1 | 0 | S | - | - | CH₃ | - | - |
| 1-176 | Si | 4 | 3 | 1 | 0 | O | - | - | CH₃ | - | - |
| 1-177 | Si | 4 | 3 | 1 | 0 | S | - | - | C₂H₅ | - | - |

**[Table 12]**

| CMPD. No. | M | n | p | n-p | m | X₁ | X₂ | R₁ | Y₁ | Y₂ | Y₃ |
|---|---|---|---|---|---|---|---|---|---|---|---|
| 1-178 | Si | 4 | 3 | 1 | 0 | O | - | - | C₂H₅ | - | - |
| 1-179 | Si | 4 | 3 | 1 | 0 | S | - | - | C₆H₅ | - | - |
| 1-180 | Si | 4 | 3 | 1 | 0 | O | - | - | C₆H₅ | - | - |
| 1-181 | Si | 4 | 2 | 2 | 0 | S | - | - | CH₃ | CH₃ | - |
| 1-182 | Si | 4 | 2 | 2 | 0 | O | - | - | CH₃ | CH₃ | - |
| 1-183 | Si | 4 | 2 | 2 | 0 | S | - | - | C₆H₅ | C₆H₅ | - |
| 1-184 | Si | 4 | 2 | 2 | 0 | O | - | - | C₆H₅ | C₆H₅ | - |
| 1-185 | Si | 4 | 1 | 3 | 0 | S | - | - | C₆H₅ | C₆H₅ | C₆H₅ |
| 1-186 | Si | 4 | 1 | 3 | 0 | O | - | - | C₆H₅ | C₆H₅ | C₆H₅ |
| 1-187 | Si | 4 | 2 | 2 | 0 | S | - | - | SC₂H₄S | | - |
| 1-188 | Si | 4 | 2 | 2 | 0 | O | - | - | SC₂H₄S | | - |
| 1-189 | Si | 4 | 2 | 2 | 0 | S | - | - | SC₃H₆S | | - |
| 1-190 | Si | 4 | 2 | 2 | 0 | O | - | - | SC₃H₆S | | - |
| 1-191 | Si | 4 | 2 | 2 | 0 | S | - | - | SC₂H₄SC₂H₄S | | - |
| 1-192 | Si | 4 | 2 | 2 | 0 | O | - | - | SC₂H₄SC₂H₄S | | - |
| 1-193 | Ge | 4 | 4 | 0 | 0 | S | - | - | - | - | - |
| 1-194 | Ge | 4 | 4 | 0 | 0 | O | - | - | - | - | - |
| 1-195 | Ge | 4 | 4 | 0 | 1 | S | S | CH₂ | - | - | - |
| 1-196 | Ge | 4 | 4 | 0 | 1 | O | S | CH₂ | - | - | - |
| 1-197 | Ge | 4 | 4 | 0 | 1 | S | O | CH₂ | - | - | - |
| 1-198 | Ge | 4 | 4 | 0 | 1 | O | O | CH₂ | - | - | - |
| 1-199 | Ge | 4 | 4 | 0 | 1 | S | S | C₂H₄ | - | - | - |
| 1-200 | Ge | 4 | 4 | 0 | 1 | O | S | C₂H₄ | - | - | - |

**[Table 13]**

| CMPD. No. | M | n | p | n-p | m | X₁ | X₂ | R₁ | Y₁ | Y₂ | Y₃ |
|---|---|---|---|---|---|---|---|---|---|---|---|
| 1-201 | Ge | 4 | 4 | 0 | 1 | S | O | C₂H₄ | - | - | - |
| 1-202 | Ge | 4 | 4 | 0 | 1 | O | O | C₂H₄ | - | - | - |
| 1-203 | Ge | 4 | 4 | 0 | 1 | S | S | 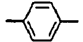 | - | - | - |
| 1-204 | Ge | 4 | 4 | 0 | 1 | O | S | 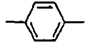 | - | - | - |
| 1-205 | Ge | 4 | 4 | 0 | 1 | S | O | 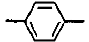 | - | - | - |
| 1-206 | Ge | 4 | 4 | 0 | 1 | O | O | 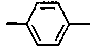 | - | - | - |
| 1-207 | Ge | 4 | 4 | 0 | 1 | S | S | 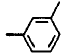 | - | - | - |
| 1-208 | Ge | 4 | 4 | 0 | 1 | O | S | 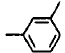 | - | - | - |
| 1-209 | Ge | 4 | 4 | 0 | 1 | S | O | 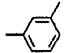 | - | - | - |
| 1-210 | Ge | 4 | 4 | 0 | 1 | O | O | 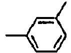 | - | - | - |
| 1-211 | Ge | 4 | 4 | 0 | 1 | S | S | 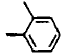 | - | - | - |
| 1-212 | Ge | 4 | 4 | 0 | 1 | O | S | 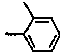 | - | - | - |
| 1-213 | Ge | 4 | 4 | 0 | 1 | S | O | 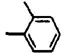 | - | - | - |
| 1-214 | Ge | 4 | 4 | 0 | 1 | O | O | 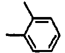 | - | - | - |

**[Table 14]**

| CMPD. No. | M | n | p | n-p | m | X₁ | X₂ | R₁ | Y₁ | Y₂ | Y₃ |
|---|---|---|---|---|---|---|---|---|---|---|---|
| 1-215 | Ge | 4 | 4 | 0 | 1 | S | S | 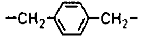 | - | - | - |
| 1-216 | Ge | 4 | 4 | 0 | 1 | O | S | 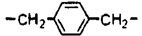 | - | - | - |
| 1-217 | Ge | 4 | 4 | 0 | 1 | S | O | 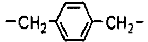 | - | - | - |
| 1-218 | Ge | 4 | 4 | 0 | 1 | O | O | 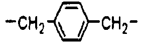 | - | - | - |
| 1-219 | Ge | 4 | 4 | 0 | 1 | S | S | 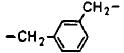 | - | - | - |
| 1-220 | Ge | 4 | 4 | 0 | 1 | O | S | 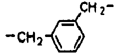 | - | - | - |
| 1-221 | Ge | 4 | 4 | 0 | 1 | S | O | 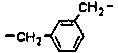 | - | - | - |
| 1-222 | Ge | 4 | 4 | 0 | 1 | O | O | 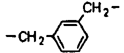 | - | - | - |
| 1-223 | Ge | 4 | 4 | 0 | 1 | S | S | 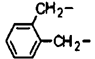 | - | - | - |
| 1-224 | Ge | 4 | 4 | 0 | 1 | O | S | 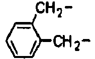 | - | - | - |
| 1-225 | Ge | 4 | 4 | 0 | 1 | S | O | 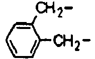 | - | - | - |
| 1-226 | Ge | 4 | 4 | 0 | 1 | O | O | 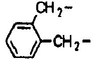 | - | - | - |
| 1-227 | Ge | 4 | 3 | 1 | 0 | S | - | - | CH₃ | - | - |
| 1-228 | Ge | 4 | 3 | 1 | 0 | O | - | - | CH₃ | - | - |

**[Table 15]**

| CMPD. No. | M | n | p | n-p | m | X₁ | X₂ | R₁ | Y₁ | Y₂ | Y₃ |
|---|---|---|---|---|---|---|---|---|---|---|---|
| 1-229 | Ge | 4 | 3 | 1 | 0 | S | - | - | C₂H₅ | - | - |
| 1-230 | Ge | 4 | 3 | 1 | 0 | O | - | - | C₂H₅ | - | - |
| 1-231 | Ge | 4 | 3 | 1 | 0 | S | - | - | C₆H₅ | - | - |
| 1-232 | Ge | 4 | 3 | 1 | 0 | O | - | - | C₆H₅ | - | - |
| 1-233 | Ge | 4 | 2 | 2 | 0 | S | - | - | CH₃ | CH₃ | - |
| 1-234 | Ge | 4 | 2 | 2 | 0 | O | - | - | CH₃ | CH₃ | - |
| 1-235 | Ge | 4 | 2 | 2 | 0 | S | - | - | C₆H₅ | C₆H₅ | - |
| 1-236 | Ge | 4 | 2 | 2 | 0 | O | - | - | C₆H₅ | C₆H₅ | - |
| 1-237 | Ge | 4 | 1 | 3 | 0 | S | - | - | C₆H₅ | C₆H₅ | C₆H₅ |
| 1-238 | Ge | 4 | 1 | 3 | 0 | O | - | - | C₆H₅ | C₆H₅ | C₆H₅ |
| 1-239 | Ge | 4 | 2 | 2 | 0 | S | - | - | SC₂H₄S | | - |
| 1-240 | Ge | 4 | 2 | 2 | 0 | O | - | - | SC₂H₄S | | - |
| 1-241 | Ge | 4 | 2 | 2 | 0 | S | - | - | SC₃H₆S | | - |
| 1-242 | Ge | 4 | 2 | 2 | 0 | O | - | - | SC₃H₆S | | - |
| 1-243 | Ge | 4 | 2 | 2 | 0 | S | - | - | SC₂H₄SC₂H₄S | | - |
| 1-244 | Ge | 4 | 2 | 2 | 0 | O | - | - | SC₂H₄SC₂H₄S | | - |
| 1-245 | Zn | 2 | 2 | 0 | 0 | S | - | - | - | - | - |
| 1-246 | Zn | 2 | 2 | 0 | 0 | O | - | - | - | - | - |
| 1-247 | Zr | 4 | 4 | 0 | 0 | S | - | - | - | - | - |
| 1-248 | Zr | 4 | 4 | 0 | 0 | O | - | - | - | - | - |
| 1-249 | Zr | 4 | 2 | 2 | 0 | S | - | - | CYCLOPENTADIENYL | CYCLOPENTADIENYL | - |
| 1-250 | Zr | 4 | 2 | 2 | 0 | O | - | - | CYCLOPENTADIENYL | CYCLOPENTADIENYL | - |
| 1-251 | Zr | 4 | 4 | 0 | 1 | S | S | CH₂ | - | - | - |

**[Table 16]**

| CMPD. No. | M | n | p | n-p | m | X₁ | X₂ | R₁ | Y₁ | Y₂ | Y₃ |
|---|---|---|---|---|---|---|---|---|---|---|---|
| 1-252 | Zr | 4 | 4 | 0 | 1 | O | S | CH₂ | - | - | - |
| 1-253 | Zr | 4 | 4 | 0 | 1 | S | O | CH₂ | - | - | - |
| 1-254 | Zr | 4 | 4 | 0 | 1 | O | O | CH₂ | - | - | - |
| 1-255 | Zr | 4 | 4 | 0 | 1 | S | S | C₂H₄ | - | - | - |
| 1-256 | Zr | 4 | 4 | 0 | 1 | O | S | C₂H₄ | - | - | - |
| 1-257 | Zr | 4 | 4 | 0 | 1 | S | O | C₂H₄ | - | - | - |
| 1-258 | Zr | 4 | 4 | 0 | 1 | O | O | C₂H₄ | - | - | - |
| 1-259 | Zr | 4 | 2 | 2 | 1 | S | S | CH₂ | CYCLOPENTADIENYL | CYCLOPENTADIENYL | - |
| 1-260 | Zr | 4 | 2 | 2 | 1 | O | S | CH₂ | CYCLOPENTADIENYL | CYCLOPENTADIENYL | - |
| 1-261 | Zr | 4 | 2 | 2 | 1 | S | O | CH₂ | CYCLOPENTADIENYL | CYCLOPENTADIENYL | - |
| 1-262 | Zr | 4 | 2 | 2 | 1 | O | O | CH₂ | CYCLOPENTADIENYL | CYCLOPENTADIENYL | - |
| 1-263 | Zr | 4 | 2 | 2 | 1 | S | S | C₂H₄ | CYCLOPENTADIENYL | CYCLOPENTADIENYL | - |
| 1-264 | Zr | 4 | 2 | 2 | 1 | O | S | C₂H₄ | CYCLOPENTADIENYL | CYCLOPENTADIENYL | - |
| 1-265 | Zr | 4 | 2 | 2 | 1 | S | O | C₂H₄ | CYCLOPENTADIENYL | CYCLOPENTADIENYL | - |
| 1-266 | Zr | 4 | 2 | 2 | 1 | O | O | C₂H₄ | CYCLOPENTADIENYL | CYCLOPENTADIENYL | - |
| 1-267 | Ti | 4 | 4 | 0 | 0 | S | - | - | - | - | - |
| 1-268 | Ti | 4 | 4 | 0 | 0 | O | - | - | - | - | - |
| 1-269 | Ti | 4 | 2 | 2 | 0 | S | - | - | CYCLOPENTADIENYL | CYCLOPENTADIENYL | - |
| 1-270 | Ti | 4 | 2 | 2 | 0 | O | - | - | CYCLOPENTADIENYL | CYCLOPENTADIENYL | - |
| 1-271 | Ti | 4 | 4 | 0 | 1 | S | S | CH₂ | - | - | - |
| 1-272 | Ti | 4 | 4 | 0 | 1 | O | S | CH₂ | - | - | - |
| 1-273 | Ti | 4 | 4 | 0 | 1 | S | O | CH₂ | - | - | - |
| 1-274 | Ti | 4 | 4 | 0 | 1 | O | O | CH₂ | - | - | - |
| 1-275 | Ti | 4 | 4 | 0 | 1 | S | S | C₂H₄ | - | - | - |

**[Table 17]**

| CMPD. No. | M | n | p | n-p | m | X₁ | X₂ | R₁ | Y₁ | Y₂ | Y₃ |
|---|---|---|---|---|---|---|---|---|---|---|---|
| 1-276 | Ti | 4 | 4 | 0 | 1 | O | S | C₂H₄ | - | - | - |
| 1-277 | Ti | 4 | 4 | 0 | 1 | S | O | C₂H₄ | - | - | - |
| 1-278 | Ti | 4 | 4 | 0 | 1 | O | O | C₂H₄ | - | - | - |
| 1-279 | Ti | 4 | 2 | 2 | 1 | S | S | CH₂ | CYCLOPENTADIENYL | CYCLOPENTADIENYL | - |
| 1-280 | Ti | 4 | 2 | 2 | 1 | O | S | CH₂ | CYCLOPENTADIENYL | CYCLOPENTADIENYL | - |
| 1-281 | Ti | 4 | 2 | 2 | 1 | S | O | CH₂ | CYCLOPENTADIENYL | CYCLOPENTADIENYL | - |
| 1-282 | Ti | 4 | 2 | 2 | 1 | O | O | CH₂ | CYCLOPENTADIENYL | CYCLOPENTADIENYL | - |
| 1-283 | Ti | 4 | 2 | 2 | 1 | S | S | C₂H₄ | CYCLOPENTADIENYL | CYCLOPENTADIENYL | - |
| 1-284 | Ti | 4 | 2 | 2 | 1 | O | S | C₂H₄ | CYCLOPENTADIENYL | CYCLOPENTADIENYL | - |
| 1-285 | Ti | 4 | 2 | 2 | 1 | S | O | C₂H₄ | CYCLOPENTADIENYL | CYCLOPENTADIENYL | - |
| 1-286 | Ti | 4 | 2 | 2 | 1 | O | O | C₂H₄ | CYCLOPENTADIENYL | CYCLOPENTADIENYL | - |
| 1-287 | Pb | 4 | 4 | 0 | 0 | S | - | - | - | - | - |
| 1-288 | Pb | 4 | 4 | 0 | 0 | O | - | - | - | - | - |
| 1-289 | Al | 3 | 3 | 0 | 0 | S | - | - | - | - | - |
| 1-290 | Al | 3 | 3 | 0 | 0 | O | - | - | - | - | - |
| 1-291 | Al | 3 | 2 | 1 | 0 | S | - | - | SCH₃ | - | - |
| 1-292 | Al | 3 | 2 | 1 | 0 | O | - | - | SCH₃ | - | - |
| 1-293 | Al | 3 | 2 | 1 | 0 | S | - | - | SC₂H₅ | - | - |
| 1-294 | Al | 3 | 2 | 1 | 0 | O | - | - | SC₂H₅ | - | - |
| 1-295 | Al | 3 | 2 | 1 | 0 | S | - | - | SC₆H₅ | - | - |
| 1-296 | Al | 3 | 2 | 1 | 0 | O | - | - | SC₆H₅ | - | - |
| 1-297 | Al | 3 | 1 | 2 | 0 | S | - | - | SC₂H₄S | | - |
| 1-298 | Al | 3 | 1 | 2 | 0 | O | - | - | SC₂H₄S | | - |
| 1-299 | Al | 3 | 1 | 2 | 0 | S | - | - | SC₂H₄SC₂H₄S | | - |
| 1-300 | Al | 3 | 1 | 2 | 0 | O | - | - | SC₂H₄SC₂H₄S | | - |

In the formula (1), specifically, m = 0, and more specifically, m = 0 while X₁ is a sulfur atom. As such compound, for example, among the compounds shown in Table 1 to Table 17, CMPD. No. 1-1, 1-35, 1-37, 1-39, 1-41, 1-43, 1-45, 1-47, 1-49, 1-51, 1-53, 1-55, 1-57, 1-59, 1-61, 1-63, 1-65, 1-67, 1-69, 1-71, 1-73, 1-75, 1-141, 1-175, 1-177, 1-179, 1-181, 1-183, 1-185, 1-187, 1-189, 1-191, 1-193, 1-227, 1-229, 1-231, 1-233, 1-235, 1-237, 1-239, 1-241, 1-243, 1-245, 1-247, 1-249, 1-267, 1-269, 1-287, 1-289, 1-291, 1-293, 1-295, 1-297 and 1-299 may be mentioned.

In the formula (1), it is preferable that n = p, m = 0, and X₁ is a sulfur atom. As such compound, for example, among the compounds shown in Table 1 to Table 17, CMPD. No. 1-1, 1-141, 1-193, 1-245, 1-247, 1-267, 1-287 and 1-289 may be mentioned. Furthermore, among these, it is more preferable that the metal atom M is any element from Group 4, Group 12, Group 13 and Group 14 of the long-period type Periodic Table, and it is even more preferable that the metal atom M is a Sn atom.

In the formula (1), when n-p is 2 or greater, that is, as an example of the compound represented by the formula (1) being a compound containing two or more Y's in the molecule, among others, a compound represented by the following formula may be mentioned. In the following compound, three Y's all exist as different groups.

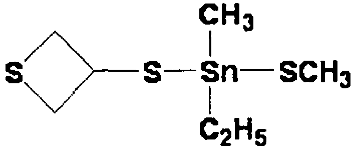

Next, the method for producing the compound represented by the formula (1) will be described.
The compound represented by the formula (1) is typically produced by a reaction between a halide of the metal atom M represented by the following formula (2), and a hydroxyl compound or thiol compound having a thietane group, represented by the following formula (3).

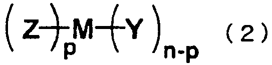

In the formula (2), M, n, p and Y respectively have the same meaning as M, n, p and Y in the formula (1); and Z represents a halogen atom.

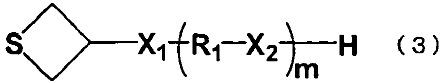

In the formula (3), X₁, X₂, R₁ and m respectively have the same meaning as X₁, X₂, R₁ and m in the formula (1).

The compound represented by the formula (2) is available as an industrial raw material or as a reagent for research purpose.
Furthermore, the compound represented by the formula (3) is a known compound, and is produced according to, for example, the method described in Patent Document 3 (JP-A No. 2003-327583).

The reaction between the halide of the metal atom M represented by the formula (2) and the hydroxyl compound or thiol compound having a thietane group, represented by the formula (3), may be performed without solvent, or may be performed in the presence of a solvent which is inert to the reaction.

Such solvent is not particularly limited as long as it is a solvent inert to the reaction, and may be exemplified by a hydrocarbon-based solvent such as petroleum ether, hexane, benzene, toluene, xylene or mesitylene;
an ether-based solvent such as diethyl ether, tetrahydrofuran or diethylene glycol dimethyl ether;
a ketone-based solvent such as acetone, methyl ethyl ketone or methyl isobutyl ketone;
an ester-based solvent such as ethyl acetate, butyl acetate or amyl acetate;
a chlorine-containing solvent such as methylene dichloride, chloroform, chlorobenzene or dichlorobenzene;
an aprotic polar solvent such as N,N-dimethylformamide, N,N-dimethylacetamide, N,N-dimethylimidazolidinone or dimethylsulfoxide; or
water.

The temperature for the reaction of the compounds represented by the formulas (2) and (3) is not particularly limited, but is typically in the range of -78°C or higher and 200°C or lower, and preferably -78°C or higher and 100°C or lower.

The reaction time is, although affected by the reaction temperature, typically from several minutes to 100 hours.

In the reaction of the compounds represented by the formulas (2) and (3), the amounts of use of the compound represented by the formula (2) and the compound represented by the formula (3) are not particularly limited, but usually, the amount of use of the compound represented by the formula (3) is 0.01 moles or more and 100 moles or less, preferably 0.1 moles or more and 50 moles or less, and more preferably 0.5 moles or more and 20 moles or less, based on 1 mole of the halogen atom contained in the compound represented by the formula (2).

Upon performing the reaction of the compounds represented by the formulas (2) and (3), it is preferable to use a basic compound as the scavenging agent for hydrogen halide being generated, in order to perform the reaction efficiently.
Examples of such basic compound include inorganic bases such as sodium hydroxide, potassium hydroxide, lithium hydroxide, sodium carbonate, potassium carbonate, lithium carbonate, sodium bicarbonate, potassium bicarbonate, lithium bicarbonate, magnesium hydroxide, and calcium hydroxide; and
organic bases such as pyridine, triethylamine, dimethylaniline, diethylaniline and 1,8-diazabicyclo[5,4,0]-7-undecene.

Next, sulfur (elemental sulfur), which is another constitutional requirement of the polymerizable composition according to the invention, will be described.
The elemental sulfur used in the polymerizable composition according to the invention is inorganic sulfur, and the one used in the resin composition according to the invention or in a transparent resin using the resin composition, has a purity of preferably 98% or higher, more preferably 99% or higher, and even more preferably 99.5% or higher. It may also be preferable to use a method of removing volatile components so as to increase the purity.

The elemental sulfur should be in a form dissolvable in the compound represented by the formula (1). The sulfur is preferably in a powdered state, and more preferably in a finely powdered state.

According to the invention, the compound represented by the formula (1) and the elemental sulfur are used in a mixed and dissolved state. However, as for the amount of addition of the elemental sulfur in the composition, from the viewpoint of high refractive index, when the sum of the compound represented by the formula (1) and the elemental sulfur is taken as 100 parts by weight, if the amount of addition of the elemental sulfur is too small, the effect of improving the refractive index may be small, and it may not be preferable. Also, when the sum of the compound represented by the formula (1) and the elemental sulfur is taken as 100 parts by weight, if the amount of addition of the elemental sulfur is too large, it may not be preferable from the viewpoint of turbidity.

Therefore, the amount of addition of the elemental sulfur is 5 parts by weight or more and 50 parts by weight or less, when the sum of the compound represented by the formula (1) and the elemental sulfur is set to 100 parts by weight. More preferably, the amount of addition of the elemental sulfur is 5 parts by weight or more and 25 parts by weight or less, when the sum of the compound represented by the formula (1) and the elemental sulfur is set to 100 parts by weight.

According to the invention, as for the method of mixing the compound represented by the formula (1) and the elemental sulfur, for example, it would be favorable that the elemental sulfur is added to the compound represented by the formula (1), and then the mixture is dissolved by stirring; it is a preferable method to increase the temperature as necessary, at that time. Furthermore, a resin modifying agent or a polymerization catalyst that will be described later, may also be added and dissolved. All of the components may be simultaneously mixed with stirring in the same vessel, or may be added stepwise and mixed, or some components may be mixed separately, and then re-mixed in the same vessel.

The polymerizable composition of the invention contains the compound represented by the formula (1) and the elemental sulfur, and if necessary, may contain a polymerization catalyst.

In this case, it is still acceptable that the plurality of compounds represented by the formula (1) are used in combination as the compound represented by the formula (1).

The content of the compound represented by the formula (1) occupying in the total weight of the polymerizable compound included in the polymerizable composition of the invention, is not particularly limited, but is typically 10% by weight or more. Since components other than the compound represented by the formula (1) and the elemental sulfur, which are the constitutional requirements of the invention, often cause a decrease in the refractive index which is a desired effect of the invention, the content is preferably 30% by weight or more, more preferably 50% by weight or more, and even more preferably 70% by weight or more, from the viewpoint of obtaining a resin having a high refractive index.

The polymerization catalyst used in the invention as necessary, usually can be cured using the method used in polymerizing a known thietane group-containing compound. The type or amount of the polymerization catalyst for obtaining a cured resin, or the type or proportion of the monomer cannot be defined generally because they vary depending on the structure of the compound constituting the polymerizable composition, but as for the type of the polymerization catalyst, amines, phosphines, organic acids and salts thereof, esters, anhydrides, inorganic acids, quaternary ammonium salts, quaternary phosphonium salts, tertiary sulfonium salts, secondary iodonium salts, Lewis acids, radical polymerization catalysts, cationic polymerization catalysts and the like are usually used.

Specific examples of the polymerization catalyst include aliphatic and aromatic tertiary amines such as triethylamine, tri-n-butylamine, tri-n-hexylamine, N,N-diisopropylethylamine, triethylenediamine, triphenylamine, N,N-dimethylethanolamine, N,N-diethylethanolamine, N,N-dibutylethanolamine, triethanolamine, N-ethyldiethanolamine, N,N-dimethylbenzylamine, N,N-diethylbenzylamine, tribenzylamine, N-methyldibenzylamine, N,N-dimethylcyclohexylamine, N,N-diethylcyclohexylamine, N,N-dimethylbutylamine, N-methyldicylcohexylamine, N-methylmorpholine, N-isopropylmorpholine, pyridine, quinoline, N,N-dimethylaniline, N,N-diethylaniline, α-, β-, or γ-picoline, 2,2'-bipyridyl, 1,4-dimethylpiperazine, dicyandiamide, tetramethylethylenediamine, hexamethylenetetramine, 1,8-diazabicyclo(5,4,0)-7-undecene, and 2,4,6-tris(N,N-dimethylaminomethyl)phenol;
phosphines such as trimethylphosphine, triethylphosphine, tri-n-propylphosphine, triisopropylphosphine, tri-n-butylphosphine, triphenylphosphine, tribenzylphosphine, 1,2-bis(diphenylphosphino)ethane, and 1,2-bis(dimethylphosphinoethane);
trifluoroacetic acid, trichloroacetic acid, trifluoroacetic anhydride, ethyl trifluoroacetate, sodium trifluoroacetate, trihalogenoacetic acid, esters thereof, anhydrides thereof and salts thereof;
trihalogenomethanesulfonic acid such as p-toluenesulfonic acid, methanesulfonic acid, trifluoromethanesulfonic acid, trifluoromethanesulfonic anhydride, ethyl trifluoromethanesulfonate, and sodium trifluoromethanesulfonate or esters thereof, anhydrides thereof and salts thereof;
inorganic acids such as hydrochloric acid, sulfuric acid and nitric acid;
quaternary ammonium salts such as tetramethylammonium chloride, tetrabutylammonium chloride and tetrabutylammonium bromide;
quaternary phosphonium salts such as tetramethylphosphonium chloride, tetrabutylphosphonium chloride, and tetrabutylphosphonium bromide;
tertiary sulfonium salts such as trimethylsulfonium bromide and tributyulsulfonium bromide;
secondary iodonium salts such as diphenyliodonium bromide;
dimethyltin dichloride, dibutyltin dichloride, dibutyltin dilaurate, dibutyltin diacetate, tetrachlorotin, dibutyltin oxide, diacetoxytetrabutyldistannoxane, zinc chloride, acetylacetone zinc, aluminum chloride, aluminum fluoride, triphenylaluminum, acetylacetone aluminum, aluminum isopropoxide, tetrachlorotitanium and complexes thereof, tetraiodotitanium, dichlorotitanium diisopropoxide, and titanium-based alkoxides such as titanium isopropoxide;
calcium acetate;
Lewis acids such as trihalogenated boron compounds and complexes thereof, such as boron trifluoride, various complexes of boron trifluoride such as boron trifluoride-diethyl ether complex, boron trifluoride-piperidine complex, boron trifluoride-ethylamine complex, boron trifluoride-acetic acid complex, boron trifluoride-phosphoric acid complex, boron trifluoride-t-butylmethyl ether complex, boron trifluoride-dibutyl ether complex, boron trifluoride-THF complex, boron trifluoride-methyl sulfide complex and boron trifluoride-phenol complex, and various complexes of boron trichloride;
radical polymerization catalysts such as 2,2'-azobis(2-cyclopropylpropionitrile), 2,2'-azobis(4-methoxy-2,4-dimethylvaleronitrile), 2,2'-azobis(2,4-dimethylvaleronitrile), t-butylperoxy-2-ethylhexanoate, n-butyl-4,4'-bis(t-butylperoxy)valerate and t-butylperoxybenzoate; and
cationic polymerization catalysts such as diphenyliodonium hexafluorophosphate, diphenyliodonium hexafluoroarsenate, diphenyliodonium hexafluoroantimony, triphenylsulfonium tetrafluoroborate, triphenylsulfonium hexafluorophosphate and triphenylsulfonium hexafluoroarsenate, but the polymerization catalyst is not limited to these exemplary compounds.

The polymerization catalyst may be used individually or as a mixture of two or more species, and when two or more species having different reactivities among these polymerization catalysts are used in combination, there are cases where the handlability of the monomer, the optical properties, color, transparency and optical inhomogeneity (striation) of the obtained resin are enhanced, thus it being preferable.

Among the compounds exemplified above as the polymerization catalyst, preferred are organotin compound such as dimethyltin dichloride, dibutyltin dichloride, dibutyltin dilaurate, dibutyltin diacetate, tetrachlorotin, dibutyltin oxide and diacetoxytetrabutyldistannoxane, trifluoroacetic acid, trichloroacetic acid, trifluoroacetic anhydride, ethyl trifluoroacetate, sodium trifluoroacetate, trihalogenoacetic acid, esters thereof, anhydrides thereof and salts thereof;
trihalogenomethanesulfonic acid such as p-toluenesulfonic acid, methanesulfonic acid, trifluoromethanesulfonic acid, trifluoromethanesulfonic anhydride, ethyl trifluoromethanesulfonate and sodium trifluoromethanesulfonate or esters thereof, anhydrides thereof and salts thereof;
Lewis acids such as trihalogenated boron compounds and complexes thereof, such as various complexes of boron trifluoride such as boron trifluoride, boron trifluoride-diethyl ether complex, boron trifluoride-piperidine complex, boron trifluoride-ethylamine complex, boron trifluoride-acetic acid complex, boron trifluoride-phosphoric acid, boron trifluoride-t-butylmethyl ether complex, boron trifluoride-dibutyl ether complex, boron trifluoride-THF complex, boron trifluoride-methyl sulfide complex and boron trifluoride-phenol complex, and various complexes of boron trichloride, and more preferred are dimethyltin dichloride, trifluoromethanesulfonic acid and anhydrides, esters and salts thereof, and various complexes of boron trifluoride.

The amount of addition of the polymerization catalyst of the polymerizable composition according to the invention is used in the range of 0.0001% by weight or more and 10% by weight or less based on the total weight of the polymerizable composition, and preferably in the range of 0.001% by weight or more and 10% by weight or less, more preferably 0.01% by weight or more and 5% by weight or less, and most preferably 0.01% by weight or more and 1% by weight or less.
When the amount of addition of the polymerization catalyst is set to the above range, production of a better cured resin is possible, the pot life is more certainly maintained, and a resin having better transparency and optical properties may be obtained.

The polymerization catalyst may be added directly to the compound described in the present specification, or may also be added after being dissolved or dispersed in another compound, but in some cases, adding the polymerization catalyst after dissolving or dispersing the catalyst in another compound may give preferable results. Furthermore, in the case of adding the polymerization catalyst, preferable results may be obtained if the addition is performed in a nitrogen atmosphere or in a dry gas atmosphere. In order to further enhance the performance of the resulting resin, preferable results may be obtained if the amount of the unreacted functional groups remaining in the resin is set to 0.5% by weight or less, more preferably 0.4% by weight or less, based on the total weight of the resin.

The polymerizable composition of the invention may contain other polymerizable compounds, in addition to the compound represented by the formula (1), within the scope of not impairing the desired effects of the invention.

As such polymerizable compound, there may be mentioned various known polymerizable monomers or polymerizable oligomers, and for example, there may be mentioned (meth)acrylic acid ester compounds, vinyl compounds, epoxy compounds, episulfide compounds, oxetane compounds, thietane compounds and the like.

The content of these other polymerizable compounds occupying in the total weight of the polymerizable compound included in the polymerizable composition of the invention is not particularly limited, but is typically 90% by weight or less, preferably 70% by weight or less, more preferably 50% by weight or less, and even more preferably 30% by weight or less. Additionally, in the case where other polymerizable compounds are included in the polymerizable composition of the invention, the lower limit of the content of the other polymerizable compounds is not particularly limited.

The essential constitutional requirement for the polymerizable composition according to the invention is the polymerizable composition containing the compound represented by the formula (1) and elemental sulfur.
For the purpose of following improvement of the resin obtained by curing the polymerizable composition or following improvement of handlability thereof, it may be preferable to subject the polymerizable composition of the invention to means and operations that are generally used upon synthesizing organic compounds, such as purification or washing, thermal insulation, cold storage, filtration or depressurization treatment, or to add known compounds or the like as stabilizers or resin modifying agents. The improvement of the resin or the improvement of handlability thereof includes further adjustment of the optical properties of the resin such as refractive index or Abbe number; the adjustment of various properties of the resin such as color, light resistance or weather resistance, heat resistance, impact resistance, hardness, specific gravity, linear expansion coefficient, polymerization shrinkage ratio, water absorbability, hygroscopicity, chemical resistance and viscoelasticity; the adjustment of transmittance or transparency; and the adjustment of the viscosity and handlability of other storage or transportation method of the polymerizable composition. Those added for the improvement of stability, such as the long-term storage stability, polymerization stability or thermal stability, may be exemplified by compounds like polymerization retarder, polymerization inhibitor, deoxygenating agent, antioxidant and the like.

Purification of a polymerizable composition is a means used for ameliorating transparency or color of the resin obtained by curing or for enhancing the purity. The method of purifying the polymerizable composition containing the compound represented by the formula (1) according to the invention may be carried out through any known methods, for example, recrystallization, column chromatography (silica gel method, activated carbon method, ion exchange resin method, or the like), extraction or the like, at any timing, and generally, it would be preferable if the transparency or color of the resin obtained by curing the composition obtained by purification is ameliorated.

The method of washing the polymerizable composition is a means used for ameliorating transparency or color of the resin obtained by curing. There may be mentioned a method of washing the polymerizable composition with a polar and/or a non-polar solvent at the time of synthesizing and taking out the polymerizable composition or after taking out the composition after the synthesis, to thereby removing or reducing any materials inhibiting transparency of the resin, for example, the inorganic salts, for example, ammonium salts, which are used or side-produced at the time of synthesizing the polymerizable composition. The solvent used herein cannot be defined generally by the polarity of the polymerizable composition itself or the solution containing the polymerizable composition to be washed. However, the solvent is preferably one capable of dissolving the component wished to be removed, and hardly compatible with the polymerizable composition itself or a solution containing the polymerizable composition to be washed, and the solvent may be used not only as a single type, but also as a mixture of two or more types. Here, the components to be removed may vary depending on the purpose or the use, but it is preferable to reduce the components as much as possible, and when adjusted to usually 5000 ppm or less, and more preferably 1000 ppm or less, good results may be obtained.

The method of thermally insulating, cold insulating or filtering the polymerizable composition is a means used in ameliorating transparency or color of the resin obtained by curing. It is general to carry out the method at the time of synthesizing and taking out the polymerizable composition or after taking out the composition after the synthesis. As for the method of thermal insulation, for example, there may be mentioned a method of heating and dissolving within the scope of no impairing the performance of the polymerizable composition and the resin obtained by curing the polymerizable composition, in the case where the polymerizable composition has undergone crystallization during storage and results in poor handlability. The temperature range of heating or the method of heating and dissolving cannot be defined generally on the basis of the structure of the compound constituting the polymerizable composition dealt with, but typically, the operation is carried out at a temperature of the freezing temperature+50°C, and preferably within +20°C, and there may be mentioned a method of dissolving while stirring mechanically with a stirring apparatus, or agitating the liquid by bubbling with a gas which is inert to the composition, or the like. As for cold storage, although it is usually performed for the purpose of increasing the storage stability of the polymerizable composition, for example, in the case where the melting point of the polymerizable composition is high, the storage temperature may be considered so as to improve the handlability after crystallization. The temperature for cold storage cannot be generally defined only on the basis of the structure or storage stability of the compound constituting the polymerizable composition to be dealt with, but typically, it is necessary to carry out the storage at or below a temperature at which the stability of the polymerizable composition containing the compound represented by the formula (1) can be maintained.

Furthermore, when the polymerizable composition according to the invention is a polymerizable composition used in optical applications, since the resin obtained from the composition is required to have very high transparency, it is usually preferable to filter the polymerizable composition through a filter having a small pore size. The pore size of the filter used herein is typically 0.05 µm or greater and 10 µm or less, but upon considering operability or performance, the pore size is preferably 0.05 µm or greater and 5 µm or less, and more preferably 0.1 µm or greater and 5 µm or less. Good results may be often obtained if the polymerizable composition of the invention is filtered non-exceptionally. For the temperature of filtering, more preferred results may be obtained if filtering is performed at a low temperature near the freezing point, but in the case where solidification is likely to proceed during filtering, the filtering may be performed at a temperature which does not impede the filtering operation.

The depressurization treatment is a means performed generally to eliminate any solvent or dissolved gas which deteriorates the performance of the resin obtained by curing the polymerizable composition, or any foul odor. Since the dissolved solvent may be generally cause to impair the refractive index or the heat resistance of obtained resin, it is preferable that the dissolved solvent is removed as possible. The acceptable level of dissolved solvent cannot be generally defined only on the basis of the structure of the compound constituting the polymerizable composition to be dealt with, or the structure of the dissolved solvent, but it is usually preferable to set the level at 1% or lower, and more preferably 5000 ppm or lower. It is preferable to remove the dissolved gas, from the viewpoint of suppressing the inhibition of polymerization and from the viewpoint of suppressing incorporation of gas bubbles in the resin obtained. Particularly for the gas meaning moisture, such as steam, it is preferable to remove the gas particularly by bubbling with a dry gas or the like. The dissolved amount can be set in accordance with the structure of the compound constituting the polymerizable composition, and the properties, structure and type of the dissolved gas.

As a representative method for producing the polymerizable composition of the invention, there may be mentioned a method of using the compound represented by the formula (1) and elemental sulfur, and if necessary, the above-described various known polymerizable compounds in combination, further adding the polymerization catalyst as necessary, and then mixing and dissolving them, or the like.

To performing molding by curing the polymerizable composition of the invention, various materials such as stabilizers, resin modifying agents, chain extending agents, crosslinking agents, photostabilizers as represented by HALS, ultraviolet absorbents as represented by benzotriazoles, antioxidants as represented by hindered phenols, coloration inhibitors, dyes or blueing agents as represented by anthraquinone-based disperse dyes, fillers, external releasing agents as represented by silicones, or internal releasing agents as represented by surfactants such as acidic phosphoric acid esters, quaternary ammonium salts or quaternary phosphonium salts, and adhesiveness improving agents, may be added according to the purpose, in the same manner as in the known molding methods. Here, the internal releasing agents include those among the above-described various catalysts which exhibit a releasing effect.

The amounts of addition of the various additives that can be added cannot be generally defined since the amounts vary depending on the type, structure and effect of the respective additives, but typically, the additives are used in an amount in the range of 0.001% by weight or more and 10% by weight or less, and preferably in the range of 0.01% by weight or more and 5% by weight or less, based on the total weight of the polymerizable composition. The dyes are not used in this range, but are preferably used in the range of 1 ppb or more and 100 ppm or less. Within these ranges, production of cured resin can be achieved more favorably, and the resulting resin may have much better transparency and optical properties.

Next, the resin according to the invention will be described.
The resin according to the invention and the optical components comprised of the resin are products obtained by polymerizing the polymerizable composition. As such method, various known methods that are used in the production of plastic lenses may be mentioned, but as a representative example, cast polymerization may be mentioned.
That is, the polymerizable composition of the invention produced by the method described above is subjected to an degassing treatment under reduced pressure or filtration through a filter according to necessity, and then the polymerizable composition is injected into a forming mold, and heated as necessary to perform polymerization. In this case, it is preferable to polymerizing by slowly heating from a low temperature to a high temperature.

The forming mold described above is composed of two casts having mirror surface polished through a gasket made of, for example, polyethylene, an ethylene-vinyl acetate copolymer, polyvinyl chloride or the like interposed therebetween. The molds consists typically of a combination of glass and glass, and in addition to that, casts of a combination of glass and a plastic sheet, a combination of glass and a metal sheet, or the like may be mentioned, without being limited to these. The forming mold may also be two sheets of casts fixed by tape such as polyester adhesive tape. If necessary, a known treatment method such as mold releasing treatment may also be performed on the cast.

In the case of performing cast polymerization, the polymerization temperature is not limited since it is affected by the polymerization conditions such as the type of the polymerization initiator, but the temperature is typically -50°C or above and 200°C or below, preferably -20°C or above and 170°C or below, and more preferably 0°C or above and 150°C or below.

The polymerization time is affected by the polymerization temperature, but is typically 0.01 hours or more and 200 hours or less, and preferably 0.05 hours or more and 100 hours or less. Furthermore, if necessary, it is also possible to perform polymerization by combining several temperatures such as a constant temperature, an elevated temperature or a lowered temperature.

The polymerizable composition of the invention can be polymerized by irradiating the composition with an active energy ray such as an electron beam, ultraviolet rays or visible rays. In this case, if necessary, a radical polymerization catalyst or a cation polymerization catalyst which initiates polymerization under the action of active energy rays is used.

The resin thus obtained may be subjected to an annealing treatment after the curing, if necessary. Furthermore, according to necessity, the resin may be subjected to various known physical or chemical treatments such as surface polishing, antistatic treatment, hard coating treatment, non-reflection coating treatment, dye treatment, photochromatic treatment (for example, lens photochromatization treatment or the like), for the purposes of preventing reflection, imparting high hardness, improving abrasion resistance, imparting anti-fog properties, or imparting stylishness.

The obtained resin and the optical lenses formed of this resin may be used after providing coating layers on one surface or on both surfaces, as necessary. As the coating layer, there may be mentioned a primer layer, a hard coat layer, an anti-reflection coating layer, an anti-fog coating layer, an antifouling layer, a water repellent layer and the like. These coating layers may be used individually alone, or may also be used in the form of multilayer of a plurality of coating layers. In the case of providing coating layers on both surfaces, the same coating layer may be provided on the respective surfaces, or different coating layers may be provided.

These coating layers may be used in combination of known additives in order to enhance the performance of the lens. As for the additives, specifically, an ultraviolet absorbent for the purpose of protecting the lens or the eyes from ultraviolet rays;
an infrared absorbent for the purpose of protecting the eyes from infrared rays;
a photostabilizer or antioxidant for the purpose of improving the weather resistance of the lens;
dyes or pigments for the purpose of enhancing stylishness of the lens, and the like may be used, and furthermore, photochromic dyes or photochromic pigments, antistatic agents, and other various additives may also be used. Also, for the layer formed by coating through application, various leveling agents may be used for the purpose of improving the coatability.

The primer layer is typically formed between a hard coat layer that will be described later and an optical lens. The primer layer is a coating layer provided for the purpose of enhancing the adhesiveness between the hard coat layer formed thereon and the lens, and in some cases, the primer layer can also improve impact resistance.

For the primer layer, any material can be used as long as the material has high adhesiveness toward the optical lens thus obtained, but usually primer compositions containing urethane resins, epoxy resins, polyester resins, melanin resins or polyvinylacetal as the main ingredient are used. The primer composition may be used with an appropriate solvent which does not exert influence on the lens, for the purpose of adjusting the viscosity of the composition. Of course, the composition may be used in a solvent-free state.

The primer composition can be formed according to any of coating methods and dry methods. In the case of using a coating method, the composition is applied onto the lens by a known coating method such as spin coating or dip coating, and then solidified to form a primer layer. In the case of performing a dry method, the primer layer is formed by a known dry method such as CVD or vacuum deposition. Upon forming the primer layer, the surface of the lens may be subjected, if necessary, to a preliminary treatment such as alkali treatment, plasma treatment or ultraviolet treatment, for the purpose of enhancing the adhesiveness.

The hard coat layer is a coating layer intended to impart functions such as crack resistance, abrasion resistance, moisture resistance, hot water resistance, heat resistance or weather resistance, on the lens surface.

For the hard coat layer, in general, a hard coat composition including an organosilicon compound having curability and oxide microparticles containing one element selected from the element group consisting of Si, Al, Sn, Sb, Ta, Ce, La, Fe, Zn, W, Zr, In and Ti, and/or microparticles composed of a complex oxide of two or more elements selected from the above element group. The oxide microparticles and/or the microparticles composed of a complex oxide may be used individually or in combination of two or more species in the hard coat composition. It is preferable that the hard coat composition include at least any of amines, amino acids, metal acetylacetonate complexes, organic acid metal salts, perchloric acids, salts of perchloric acids, acids, metal chlorides and polyfunctional epoxy compounds, in addition to the above-described components. The hard coat composition may employ an appropriate solvent which does not exert influence on the lens. Of course, the composition may be used in a solvent-free state.

The hard coat layer is usually formed by applying the hard coat composition by a known coating method such as spin coating or dip coating, and then curing the composition. As the curing method, there may be mentioned methods such as thermal curing, or curing by irradiation of energy rays such as ultraviolet rays or visible rays. In order to prevent generation of interference fringe, the refractive index of the hardcoat layer is preferably such that the difference between the refractive index of the hardcoat layer and the refractive index of the lens is in the range of ± (plus or minus) 0.1.

The anti-reflection layer is usually formed on the hard coat layer according to necessity. The anti-reflection layer may be classified into inorganic systems and organic systems, and in the case of the inorganic systems, an inorganic oxide such as SiO₂ or TiO₂ is employed, and the layer is formed by a dry method such as vacuum deposition, sputtering, ion plating, ion beam assist or CVD. In the case of the organic systems, the layer is formed by a wet method using a composition including an organosilicon compound and silica-based microparticles having internal cavities.

The anti-reflection layer may be of a single layer or of multilayer, and in the case of using a single layer, it is preferable that the refractive index of the anti-reflection layer is lower by at least 0.1 or more, compared to the refractive index of the hard coat layer. In order to generate the anti-reflection function further effectively, it is preferable to provide a multilayer anti-reflective layer, and in that case, a lower refractive index layer and a high refractive index layer are laminated alternately. Also in this case, it is preferable that the difference in refractive indices of the low refractive index layer and the high refractive index layer is 0.1 or greater. The high refractive index layer may be exemplified by layer of ZnO, TiO₂, CeO₂, Sb₂O₅, SnO₂, ZrO₂, Ta₂O₅ and the like, while the low refractive index layer may be exemplified by a SiO₂ layer or the like.

Above the anti-reflection film layer, an anti-fog coating layer, an antifouling layer or a water repellent layer may be formed as necessary. The method of forming an anti-fog coating layer, an antifouling layer or a water repellent layer is not particularly limited in terms of the treatment method or treated materials, as long as these factors do not bring adverse influence on the function of preventing reflection, and known anti-fog coating treatment method, antifouling treatment method, water repellent treatment method, and materials can be used.
For example, as for the anti-fog coating and antifouling treatment methods, a method of covering the surface with surfactants, a method of forming a hydrophilic film onto the surface to change the surface to water-absorbable, a method of covering the surface with fine unevenness to increase water absorbability, a method of using a photocatalytic activity to change the surface water-absorbable, a method of ultra-water-repellent treatment to prevent attachment of water drops, and the like may be mentioned.
Furthermore, as for the water repellent treatment method, a method of forming a water repellent treated layer by depositing or sputtering a fluorine-containing silane compound or the like, or a method of dissolving a fluorine-containing silane compound in a solvent and then coating the solution to form a water repellent treated layer, may be mentioned.

The obtained resin and the optical lens formed of this resin may be used after being dyed by using dyes that are appropriate for the purpose of imparting stylishness or photochromic properties. Hereinafter, dyeing of optical lenses will be illustrated.

Dyeing of optical lenses can be performed by known dyeing methods, but usually are performed by several methods that are described below.
(a) A method of immersing the lens in a dye solution,
(b) a method of coating the lens by using a coating agent containing a dye, or a method of providing a coating layer capable of being dyed, and dyeing the coating layer,
(c) a method of incorporating a material capable of being dyed, into a raw material monomer, and polymerizing the monomer, and
(d) a method of heating a sublimation dye, and allowing the dye to sublime.

The method (a) is generally a method of immersing a lens material having a predetermined optical surface, in a dye solution having the dye in use dissolved or uniformly dispersed therein (dyeing process), and then heating the lens to fix the dye as necessary (post-dyeing annealing process).

The dye used in the dyeing process is, for example, a known dye, and is not particularly limited, but usually an oil-soluble dye or a disperse dye is used. The solvent used in the dyeing process is not particularly limited if the dye used can be dissolved or uniformly dispersed therein.
In this dyeing process, surfactants for dispersing the dye in the dye solution, or a carrier for promoting dye uptake may be added as necessary.

In the dyeing process, a dye and a surfactant which is added as necessary are dispersed in water or a mixture of water and an organic solvent to prepare a dyeing bath, and an optical lens is immersed in this dyeing bath to perform dyeing at a predetermined temperature for a predetermined time. The dyeing temperature and time may vary depending on the desired coloration density, but may be typically 120°C or lower, and from about several minutes to several ten hours. The dye concentration in the dyeing bath is about 0.01 to 10% by weight. If dyeing is difficult, the process may be carried out under pressure. The post-dyeing annealing process which is carried out according to necessity, is a process for performing a heat treatment to the dyed lens material. The heat treatment is performed such that the water remaining on the surface of the lens material which has been dyed in the dyeing process, is removed using a solvent, or the solvent is blow-dried, and then the lens material is retained in a furnace such as, for example, an infrared heating furnace in an open air atmosphere or a resistance heating furnace, for a predetermined time. The post-dyeing annealing process prevents decoloration of the dyed lens material (decoloration preventive treatment), and also removes moisture that has penetrated inside the lens material during dyeing.

The method (b) is not a method of directly dyeing the plastic lens material, but a method of forming a dyed coating layer on the lens surface by applying an organic coating solution having a dye dispersed or dissolved therein, onto a plastic lens, and then subjecting the plastic lens to curing, or a method of forming a dyeable coating layer on the surface of a plastic lens, and then employing the method (a), that is, dyeing the plastic lens by immersing the plastic lens in a dye solution and heating.

The method (c) is a method of dissolving a dye in advance in the raw material monomer of the plastic lens, and then performing polymerization. The dye used is not particularly limited as long as it can be uniformly dissolved or dispersed to an extent of not impairing the optical properties, in the raw material monomer.

Examples of the method (d) include the following (d1) to (d3).
(d1) A method of dyeing a plastic lens by subliming a solid sublimation dye,
(d2) a method of facing a substrate formed by applying a solution containing a sublimation dye, to a plastic lens in a noncontact manner, and heating the substrate and the lens to achieve dyeing, and
(d3) a method of transferring a transfer layer including a coloring layer containing a sublimation dye and an adhesive layer, onto a plastic lens, and then heating the plastic lens to achieve dyeing.
The resin of the invention and the optical lens formed of this resin may be dyed by any method. The dye used is not particularly limited as long as it is a dye having sublimability.

The resin cured products and optical components obtained by polymerizing the polymerizable composition of the invention have high transparency, good heat resistance and mechanical strength, while having high refractive indices (nd) exceeding 1.7.

As the optical components according to the invention, there may be mentioned, for example, various plastic lenses such as lenses for spectacle for vision correction, lenses for photographing instruments, Fresnel lenses for liquid crystal projectors, lenticular lenses, and contact lenses;
sealing materials for light emitting diodes (LED);
waveguides;
optical adhesives used in bonding optical lenses or waveguides;
anti-reflection films used in optical lenses;
transparent coating or transparent substrates used in the liquid crystal display apparatus members such as substrates, light guide plates, films and sheets; and the like.

As such, the resin obtained by polymerizing the polymerizable compound of the invention has high transparency, good heat resistance and mechanical strength, while having a high refractive index (nd) exceeding 1.7, and thus is useful as a resin used in optical components such as, for example, plastic lenses. The polymerizable composition of the invention is also useful, for example, as a raw material monomer composition for transparent resins having very high refractive indices.

Hereinafter, the invention will be described in more detail with reference to Production Examples and Examples, but the invention is not intended to be limited to these Examples.

### (Reference Production Example 1)

3-Thietanol was synthesized according to the method described in Patent Document 3 (JP-A No. 2003-327583).

In addition, 3-mercaptothietane was synthesized using the obtained 3-thietanol. That is, in a reaction vessel equipped with a stirring apparatus and a thermometer, 190 g of thiourea, 253 g of 35% aqueous hydrochloric acid, and 250 g of water were charged and stirred, and to this reaction solution, 156 g of 3-thietanol was added dropwise over 1 hour. The mixture was stirred at 30°C for 24 hours to perform a reaction, and then 177 g of 24% aqueous ammonia was added dropwise over 1 hour. The reaction was further carried out at 30°C for 15 hours, and then the system was left to stand still. The organic layer (lower layer) was taken out, and 134 g of a crude product was obtained. The crude product thus obtained was distilled under reduced pressure, and a distillate fraction having a boiling point of 40°C/106 Pa was collected, to thus obtain the desired product, 3-mercaptothietane, as a colorless transparent liquid.

### (Reference Production Example 2)

### (Production of compound represented by CMPD. No. 1-1 in Table 1 above)

11.15 g (0.105 mol) of 3-mercaptothietane was introduced into 50 g of purified water, and subsequently, 41.2 g (0.103 mol) of a 10% aqueous solution of NaOH was introduced dropwise over 40 minutes at room temperature. Subsequently, the reaction solution was heated to 30°C, and 65.2 g of a 10% aqueous solution of tin tetrachloride (corresponding to 0.025 moles of tin tetrachloride) was added dropwise over 4 hours at the same temperature. After completion of the dropwise addition, the mixture was stirred for another 2 hours at the same temperature. To this reaction mixture, 100 ml of chloroform was added, and the organic layer and the aqueous layer were partitioned. The organic layer was washed two times with 100 ml of pure water, and then dried using anhydrous sodium sulfate. From this extract, the solvent was distilled off, and 13.40 g (yield 99%) of the compound represented by CMPD. No. 1-1 in Table 1 was obtained.

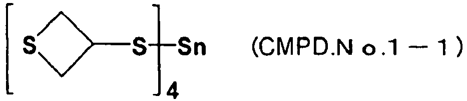

### (Preparation of polymerizable composition and production of resin cured product by the polymerization)

Evaluation of the properties of the resins or optical components (lenses) produced in the following Examples and Comparative Examples was performed by the following method.
External appearance: The ransparency and existence or nonexistence of optical inhomogeneity was verified by visual inspection and microscopic observation.
Refractive index: Measured using a Pulfrich refractometer at 20°C.

### (Example 1)

28.5 g of the compound represented by CMPD. No. 1-1 in Table 1, which was produced in Reference Production Example 2, and 1.5 g of elemental sulfur were weighed in a glass beaker at 40°C, and the mixture was filtered through a Teflon (registered trademark) filter without adding a polymerization catalyst. Then, under reduced pressure of 1.3 kPa or below, the mixture was sufficiently deaerated until no foaming was observed. The polymerizable composition obtained after deaeration was injected into a mold formed from a glass mold and tape, and then was placed in a heating oven, where polymerization was performed for 20 hours. During the polymerization, the inside of the oven was heated in multiple steps from 60°C to 120°C.

The molded specimen of the obtained resin had good transparency and had good external appearance without strain. The refractive index of the obtained resin was measured, and the refractive index nd was 1.801.

### (Example 2)

24.0 g of the compound represented by CMPD. No. 1-1 in Table 1, which was produced in Reference Production Example 2, and 6.0 g of elemental sulfur were weighed in a glass beaker at 40°C, and the mixture was filtered through a Teflon (registered trademark) filter without adding a polymerization catalyst. Then, under reduced pressure of 1.3 kPa or below, the mixture was sufficiently deaerated until no foaming was observed. The polymerizable composition obtained after deaeration was injected into a mold formed from a glass mold and tape, and then was placed in a heating oven, where polymerization was performed for 20 hours. During the polymerization, the inside of the oven was heated in multiple steps from 60°C to 120°C.

The molded specimen of the obtained resin had good transparency and had good external appearance without strain. The refractive index of the obtained resin was measured, and the refractive index nd was 1.838.

### (Example 3)

22.5 g of the compound represented by CMPD. No. 1-1 in Table 1, which was produced in Reference Production Example 2, and 7.5 g of elemental sulfur were weighed in a glass beaker at 40°C, and the mixture was filtered through a Teflon (registered trademark) filter without adding a polymerization catalyst. Then, under reduced pressure of 1.3 kPa or below, the mixture was sufficiently deaerated until no foaming was observed. The polymerizable composition obtained after deaeration was injected into a mold formed from a glass mold and tape, and then was placed in a heating oven, where polymerization was performed for 20 hours. During the polymerization, the inside of the oven was heated in multiple steps from 60°C to 120°C.

The molded specimen of the obtained resin had good transparency and had good external appearance without strain. The refractive index of the obtained resin was measured, and the refractive index nd was 1.857.

### (Comparative Example 1)

30 g of the compound represented by CMPD. No. 1-1 in Table 1, which was produced in Reference Production Example 2, was weighed in a glass beaker at room temperature (25°C), and the compound was filtered through a Teflon (registered trademark) filter without adding a polymerization catalyst. Then, under reduced pressure of 1.3 kPa or below, the compound was sufficiently deaerated until no foaming was observed. The polymerizable composition obtained after deaeration was injected into a mold formed from a glass mold and tape, and then was placed in a heating oven, where polymerization was performed for 20 hours. During the polymerization, the inside of the oven was heated in multiple steps from 30°C to 120°C.

The molded specimen of the obtained resin had good transparency and had good external appearance without strain. The refractive index of the obtained resin was measured, and the refractive index nd was 1.790.

## Claims

1. A polymerizable composition comprising a compound represented by the following formula (1) and elemental sulfur: 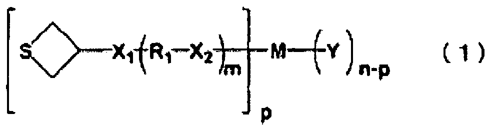 wherein in the formula (1), M represents Sn; X₁ and X₂ each independently represent a sulfur atom or an oxygen atom; R₁ represents a divalent organic group selected from a chain-like aliphatic group having 1 or more and 20 or fewer carbon atoms, a cyclic aliphatic group having 3 or more and 20 or fewer carbon atoms, an aromatic group having 5 or more and 20 or fewer carbon atoms, and an aromatic-aliphatic group having 6 or more and 20 or fewer carbon atoms; m represents an integer of 0 or 1 or more; p represents an integer of 1 or more and n or less; n represents the valency of the metal atom M; Y each independently represent an inorganic or organic residue selected from a hydrogen atom, a halogen atom, a hydroxyl group, a thiol group, a substituted or unsubstituted alkyl group, a substituted or unsubstituted aryl group, a substituted or unsubstituted aralkyl group, a substituted or unsubstituted alkoxy group, a substituted or unsubstituted alkylthio group, a substituted or unsubstituted aryloxy group, or a substituted or unsubstituted arylthio group; and when n-p is 2 or more, Y's may bind to each other to form a ring containing the metal atom M, and
wherein the content of the elemental sulfur is 5 parts by weight or more and 50 parts by weight or less, based on 100 parts by weight of the sum of the compound represented by the formula (1) and the elemental sulfur.

2. The polymerizable composition as set forth in claim 1, wherein m is 0 in the compound represented by the formula (1).

3. The polymerizable composition as set forth in claim 2, wherein for the compound represented by the formula (1), m = 0 and X₁ is sulfur atom.

4. The polymerizable composition as set forth in claim 3, wherein for the compound represented by the formula (1), n = p, m = 0, and X₁ is sulfur atom.

5. The polymerizable composition as set forth in claim 1, wherein m = 0, X₁ is a sulfur atom, p = 4 and n = 4.

6. A method for producing a resin, comprising cast polymerizing the polymerizable composition as set forth in claim 1.

7. A resin obtained by polymerizing the polymerizable composition as set forth in claim 1 or claim 5.

8. An optical component comprised of the resin as set forth in claim 7.

9. A lens formed of the resin as set forth in claim 7.

## Patentansprüche

1. Polymerisierbare Zusammensetzung, die eine Verbindung der folgenden Formel (1) und elementaren Schwefel umfasst: 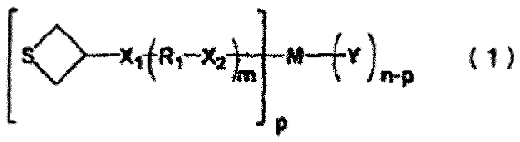 wobei in Formel (1) M für Sn steht; X₁ und X₂ jeweils unabhängig voneinander für ein Schwefelatom oder ein Sauerstoffatom stehen; R₁ für eine zweiwertige organische Gruppe steht, die aus einer kettenförmigen aliphatischen Gruppe mit 1 oder mehr und 20 oder weniger Kohlenstoffatomen, einer zyklischen aliphatischen Gruppe mit 3 oder mehr und 20 oder weniger Kohlenstoffatomen, einer aromatischen Gruppe mit 5 oder mehr und 20 oder weniger Kohlenstoffatomen, einer aromatisch-aliphatischen Gruppe mit 6 oder mehr und 20 oder weniger Kohlenstoffatomen ausgewählt ist; m für eine ganze Zahl von 0 oder 1 oder mehr steht; p für eine ganze Zahl von 1 oder mehr und n oder weniger steht; n für die Wertigkeit des Metallatoms M steht; die Y unabhängig voneinander für einen anorganischen oder organischen Rest stehen, der aus einem Wasserstoffatom, einem Halogenatom, einer Hydroxylgruppe, einer Thiolgruppe, einer substituierten oder unsubstituierten Alkylgruppe, einer substituierten oder unsubstituierten Arylgruppe, einer substituierten oder unsubstituierten Aralkylgruppe, einer substituierten oder unsubstituierten Alkoxygruppe, einer substituierten oder unsubstituierten Alkylthiogruppe, einer substituierten oder unsubstituierten Aryloxygruppe oder einer substituierten oder unsubstituierten Arylthiogruppe ausgewählt ist; und wenn n-p 2 oder mehr ist, können die Y aneinander binden, um einen Ring zu bilden, der das Metallatom M enthält, und
wobei der Gehalt an elementarem Schwefel 5 Gewichtsteile oder mehr und 50 Gewichtsteile oder weniger beträgt, bezogen auf 100 Gewichtsteile der Summe aus der Verbindung der Formel (1) und dem elementaren Schwefel.

2. Polymerisierbare Zusammensetzung nach Anspruch 1, wobei in der Verbindung der Formel (1) m = 0 ist.

3. Polymerisierbare Zusammensetzung nach Anspruch 2, wobei in der Verbindung der Formel (1) m = 0 ist und X₁ ein Schwefelatom ist.

4. Polymerisierbare Zusammensetzung nach Anspruch 3, wobei in der Verbindung der Formel (1) n = p ist, m = 0 ist und X₁ ein Schwefelatom ist.

5. Polymerisierbare Zusammensetzung nach Anspruch 1, wobei m = 0 ist, X₁ ein Schwefelatom ist, p = 4 ist und n = 4 ist.

6. Verfahren zur Herstellung eines Harzes, welches das Gießpolymerisieren einer polymerisierbaren Zusammensetzung nach Anspruch 1 umfasst.

7. Harz, erhalten durch Polymerisation einer polymerisierbaren Zusammensetzung nach Anspruch 1 oder Anspruch 5.

8. Optisches Bauteil, das aus einem Harz nach Anspruch 7 besteht.

9. Linse, die aus einem Harz nach Anspruch 7 besteht.

## Revendications

1. Composition polymérisable comprenant un composé représenté par la formule suivante (1) et un soufre élémentaire : 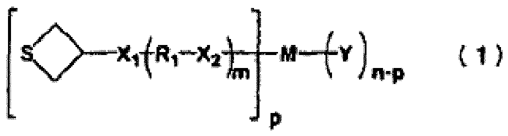 où dans la formule (1), M représente Sn ; X₁ et X₂ représentent chacun indépendamment un atome de soufre ou un atome d'oxygène ; R₁ représente un groupe organique divalent sélectionné d'un groupe aliphatique semblable à une chaîne ayant 1 ou plus et 20 ou moins d'atomes de carbone, un groupe aliphatique cyclique ayant 3 ou plus et 20 ou moins d'atomes de carbone, un groupe aromatique ayant 5 ou plus et 20 ou moins atomes de carbone, et un groupe aromatique-aliphatique ayant 6 ou plus et 20 ou moins atomes de carbone ; m représente un entier de 0 ou 1 ou plus ; p représente un entier de 1 ou plus et n ou moins ; n représente la valence de l'atome de métal M ; chaque Y représente indépendamment un résidu inorganique ou organique sélectionné parmi un atome d'hydrogène, un atome d'halogène, un groupe hydroxyle, un groupe thiol, un groupe alkyle substitué ou non substitué, un groupe aryle substitué ou non substitué, un groupe aralkyle substitué ou non substitué, un groupe alkoxy substitué ou non substitué, un groupe alkylthio substitué ou non substitué, un groupe aryloxy substitué ou non substitué ou un groupe arylthio substitué ou non substitué ; et lorsque n-p est de 2 ou plus, les Y's peuvent se lier les uns aux autres pour former un cycle contenant l'atome de métal M, et
où la teneur en soufre élémentaire représente 5 parties en poids ou plus et 50 parties en poids ou moins, basée sur 100 parties en poids de la somme du composé représenté par la formule (1) et le soufre élémentaire.

2. Composition polymérisable selon la revendication 1, dans laquelle m est 0 dans le composé représenté par la formule (1).

3. Composition polymérisable selon la revendication 2, dans laquelle pour le composé représenté par la formule (1), m - 0 et X₁ est un atome de soufre.

4. Composition polymérisable selon la revendication 3, dans laquelle pour le composé représenté par la formule (1), n = p, m = 0, et X₁ est un atome de soufre.

5. Composition polymérisable selon la revendication 1, dans laquelle m = 0, X₁ est un atome de soufre, p = 4 et n = 4.

6. Procédé de production d'une résine, comprenant la polymérisation de coulée de la composition polymérisable selon la revendication 1.

7. Résine obtenue par la polymérisation de la composition polymérisable selon la revendication 1 ou la revendication 5.

8. Composant optique constitué de la résine telle qu'exposée dans la revendication 7.

9. Lentille formée à partir de la résine telle qu'exposée dans la revendication 7.
